Europäisches Patentamt

European Patent Office

Office européen des brevets

(19)

(11) **EP 1 237 697 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(21) Anmeldenummer: **00993389.6**

(22) Anmeldetag: **18.12.2000**

(51) Int Cl.7: **B29C 44/22**

(86) Internationale Anmeldenummer:
**PCT/EP2000/012882**

(87) Internationale Veröffentlichungsnummer:
**WO 2001/043939 (21.06.2001 Gazette 2001/25)**

(54) **EXTRUSIONSVORRICHTUNG UND VERFAHREN ZUR HERSTELLUNG VON KUNSTSTOFFHOHLPROFILEN MIT WENIGSTENS EINEM AUSGESCHÄUMTEN HOHLKAMMERRAUM**

EXTRUSION DEVICE AND METHOD FOR PRODUCING PLASTIC HOLLOW PROFILES HAVING AT LEAST ONE HOLLOW CHAMBER SPACE THAT IS FILLED WITH FOAM

DISPOSITIF D'EXTRUSION ET PROCEDE POUR PRODUIRE DES PROFILES CREUX EN PLASTIQUE COMPORTANT AU MOINS UN ESPACE DE CHAMBRE CREUSE EN MOUSSE EXPANSEE

(84) Benannte Vertragsstaaten:
**AT BE CH CY DE DK ES FI FR GB GR IE IT LI LU MC NL PT SE TR**

(30) Priorität: **18.12.1999 DE 19961306**

(43) Veröffentlichungstag der Anmeldung:
**11.09.2002 Patentblatt 2002/37**

(73) Patentinhaber: **Veka AG**
**48324 Sendenhorst (DE)**

(72) Erfinder: **TOPP, Alfons**
**48317 Drensteinfurt (DE)**

(74) Vertreter: **Hoffmeister, Helmut, Dr. Dipl.-Phys.**
**Patentanwalt**
**Goldstrasse 36**
**48147 Münster (DE)**

(56) Entgegenhaltungen:
**EP-A- 0 897 789      DE-A- 1 959 464**
**DE-A- 2 844 006      DE-B- 1 205 692**
**US-A- 5 927 129**

• **PATENT ABSTRACTS OF JAPAN vol. 008, no. 267 (M-343), 7. Dezember 1984 (1984-12-07) & JP 59 140034 A (FUKUBI KAGAKU KOGYO KK), 11. August 1984 (1984-08-11)**

**Beschreibung**

Die Erfindung betrifft eine Extrusionsvorrichtung zur Herstellung von ausgeschäumten Kunststoffhohlprofilen.

Aus der DE-OS 1 959 464 ist ein Verfahren und eine Vorrichtung zum kontinuierlichen Strangpressen von endlosen Profilen mit einem Mantel aus thermoplastischem Kunststoff und einem Schaumstoffkern bekannt. In einem Profilwerkzeug eines Extruders für die Herstellung eines Mantelprofils mit einem Hohlraum ist ein Gemischzuführungsrohr angeordnet, durch das ein Reaktionsgemisch in den Hohlraum injiziert werden kann, um darin einen Schaumstoffkern auszubilden. Das Kunststoffprofil wird anschließend in einer Kühl- und Kalibriereinrichtung gerichtet. Das Gemischzuführungsrohr ragt bis in den Hohlraum der Kalibriereinrichtung. Die Düse des Gemischzuführungsrohrs liegt in einem Bereich auf der Profilwandung auf, in dem die Temperatur des Mantelprofils auf mindestens 100°C, insbesondere auf 20° bis 50°C abgesunken ist. Das Gemischzuführungsrohr ist längsverschieblich, um die axiale Position der Düse einstellen zu können. Nachteilig ist jedoch, dass das durch die Düse injizierte Reaktionsgemisch in den heißen Bereich des Mantelprofils zurückströmen kann. Die hierzu vorgeschlagene Umfassung der Düse mit einem Dichtring, der den Ringraum zwischen Gemischzuführungsrohr und Mantelprofil abdichtet, ist nicht nur kostenträchtig, sondern auch störungsanfällig, da die sich ausbildende Schaumfront unmittelbar vor der Injektionsdüse liegt. Bei einem Verkleben des Dichtrings muss das komplette Profilwerkzeug demontiert werden. Das festgeklebte Gemischzuführungsrohr ist nur unter Zerstörung des Mantelprofilrohrs zu entfernen. Ein störungsfreier, unbeaufsichtigter Betrieb ist mit dem bekannten Verfahren und der bekannten Vorrichtung nicht gewährleistet.

Ebenso ist bei einer aus der DE-A 1 205 692 bekannten Extrusionsrichtung vorgesehen, in einem Profilwerkzeug mit einem Schmelzeringkanal zur Herstellung eines festen Rohrprofils aus einem Kunststoff ein Gemischzuführungsrohr für ein Schaumgemisch anzuordnen, durch welches das Innere des Rohrprofils im selben Arbeitsschritt mit dem Schaum ausgefüllt werden kann. Das Gemischzuführungsrohr ist ebenfalls parallel zur Extrusionsrichtung ausgerichtet, so dass sich die oben geschilderten Probleme bei der Herstellung ausgeschäumter Profile ebenfalls ergeben.

Es stellt sich daher die Aufgabe, eine verbesserte Extrusionsvorrichtung anzugeben, mit der eine wirtschaftliche und störungsfreie, kontinuierliche Extrusion von Kunststoffhohlprofilen mit wenigstens einer ausgeschäumten Hohlkammer erreicht werden kann.

Diese Aufgabe wird bei einer Extrusionsvorrichtung der eingangs genannten Art durch die Merkmale des Anspruchs 1 gelöst.

Besondere Vorteile werden dadurch erzielt, dass die Lanzenführungsachse und die Bahn des Kunststoffhohlprofils in der Kühl- und Kalibriereinrichtung gegenüber einer Horizontalen in einem Winkel $\alpha =$ 1 ... 10° in Abzugsrichtung nach unten geneigt sind.

Als besonders geeignet hat sich ein Winkel von 1 ... 1,5° erwiesen. Bei einer solchen Neigung kann die Haftung der schäumbaren Flüssigkeit an den Wandungen des Kunststoffhohlprofils überwunden werden und es kommt zu einem Abfließen der Flüssigkeit in einer Richtung von der Schäumlanzenspitze 401 weg. Die Neigung ist jedoch so gering, dass nur eine sehr geringe Fließgeschwindigkeit des Schäummittels erreicht wird. Hierdurch ist gewährleistet, dass das Aufschäumen noch innerhalb des Bereichs der Kühl- und Kalibriereinrichtung erfolgt und dass kein Schäummittel vor Einsetzen der Schäumreaktion bis in die Abzugseinrichtung gelangt.

Die Führungsbahn ist vorzugsweise in dem gleichen Winkel $\alpha$ zur Horizontalen angestellt wie die Lanzenführungsachse, so dass die Führungsbahn und die Lanzenführungsachse coaxial angeordnet sind.

Vorteilhaft ist insbesondere eine Ausführungsform, bei der die Schäumlanze mit ihrem Außenumfang einen radialen Abstand von dem Außenumfang des Extruders wahrt.

Der "radiale Abstand" soll auf die Extrudermittelachse des Extruders bezogen sein und eine Distanz bezeichnen, die sich zwischen dem Extruder und der Schäumlanze in einer Schnittansicht senkrecht zur Extrudermittelachse ergibt.

Durch diesen radialen Abstand ist die Schäumlanze frei zugänglich und kann an der Lanzeneintrittsöffnung von hinten in das Profilwerkzeug eingesetzt werden. Die Schäumlanze kann so auch während des Betriebs der Extrusionsvorrichtung eingesetzt, verschoben und/oder entnommen werden, ohne dass das Profilwerkzeug zerlegt werden muss.

Um der Durchbiegung entgegenzuwirken, kann eine Führungsbahn vorgesehen sein, auf der die Schäumlanze gleitbar und axial verschieblich gelagert ist. Der nach hinten aus dem Profilwerkzeug ragende Teilbereich der Schäumlanze kann auf der Führungsbahn aufliegen und wird dort abgestützt. Eine Gleitbeschichtung auf der Führungsbahn begünstigt die axiale Verschieblichkeit der Schäumlanze.

Diese Führungsbahn kann direkt auf auf den Extruder aufgesetzt sein.

Bei einer weiteren Ausführungsform umfasst die Kühl- und Kalibriereinrichtung eine Rollenkalibriereinrichtung, in der das Kunststoffhohlprofil allseitig mit einer Vielzahl von Rollen mit Druck beaufschlagt wird. Vorteilhaft ist hierbei, dass nur wesentlich geringere Reibungskräfte als beim Durchzug des extrudierten Kunststoffhohlprofils durch Kalibrierblenden zu überwinden sind, so dass der Abzug des Profils erleichtert ist.

Weitere vorteilhafte Ausgestaltungen der erfindungsgemäßen Extrusionsvorrichtung sind den Unteransprüchen 6 bis 14 sowie der nachfolgenden Beschreibung des Ausführungsbeispiels zu entnehmen.

Die Erfindung betrifft weiterhin ein Verfahren gemäß dem Oberbegriff des Anspruchs 16.

Angesichts der oben erläuterten Nachteile des aus dem Stand der Technik bekannten Verfahrens stellt sich hierzu die Aufgabe, eine wirtschaftliche und störungsfreie, kontinuierliche Extrusion von Kunststoffhohlprofilen mit wenigstens einer ausgeschäumten Hohlkammer zu erzielen.

Diese Aufgabe wird dadurch gelöst, dass das aus dem Profilwerkzeug austretende Kunststoffhohlprofil auf einer Bahn abgezogen und nachbehandelt wird, die vom Profilwerkzeug ausgehend um einen Winkel α=1...10° gegenüber einer Horizontalen nach unten geneigt ist.

Hierdurch wird erreicht, dass das injizierte Reaktionsgemisch von einer Injektionsdüse wegfließt und sich die Schaumfront erst in einem Abstand von der Schäumlanzenspitze auszubilden beginnt. Damit ist zum einen der Rückfluss des Reaktionsgemisches in heißere Bereiche des Kunststoffhohlprofils unterbunden und zum anderen wird ein Verkleben der Schäumlanzenspitze wirksam verhindert.

Dieses vorteilhafte Verfahren kann noch dadurch verbessert werden, dass ein Reaktionsgemisch ausgewählt wird, das bei einer an der Lanzenspitze gegebenen Schäummitteltemperatur eine Reaktionszeit von 10 ... 20 s bis zur Ausbildung von Kunststoffschaum hat.

Bevorzugt werden Polyole (Polyalkohole) mit Isocyanaten als Schäummittel injiziert. Die Reaktion des Gemisches aus den beschriebenen Reaktionskomponenten zu einem Polyurethanschaum erzeugt einen die Hohlkammer gleichmäßig ausfüllenden Kunststoffisolierschaumkörper.

Weitere vorteilhafte Ausgestaltungen des Verfahrens sind den Unteransprüchen 18 bis 25 zu entnehmen.

Die Erfindung wird nachfolgend anhand von Ausführungsbeispielen und mit Bezug auf die Zeichnung näher beschrieben. Es zeigen im einzelnen:

Fig. 1    einen Ausschnitt der Extrusionsvorrichtung der Erfindung in einer Seitenansicht;

Fig. 2    ein Detailausschnitt aus Fig. 1 mit einem Profilwerkzeug mit eingeschobener Schäumlanze in einer schematischen Seitenansicht;

Fig. 3    das Profilwerkzeug in einer Schnittansicht;

Fig. 4    das Profilwerkzeug in einer Vorderansicht;

Fig. 5a    ein mit der Extrusionsvorrichtung hergestelltes Kunststofffenster-Kämpferprofil in einer perspektivischen Ansicht;

Fig. 5b    ein mit der Extrusionsvorrichtung hergestelltes Kunststofffenster-Rahmenprofil in einer perspektivischen Ansicht

Fig. 6    eine Schäumlanze in einer Schnittansicht;

Fig. 7    eine Kalibrierblende für ein Kunststoff-Rahmenprofil gemäß Fig. 5b;

Fig. 8    eine Rollenkalibriervorrichtung in einer schematischen Schnittansicht;

Fig. 9    ein ausschäumbares Kunststoffhohlprofil in Schnittansicht;

Fig. 10    ein Profilwerkzeug in Draufsicht.

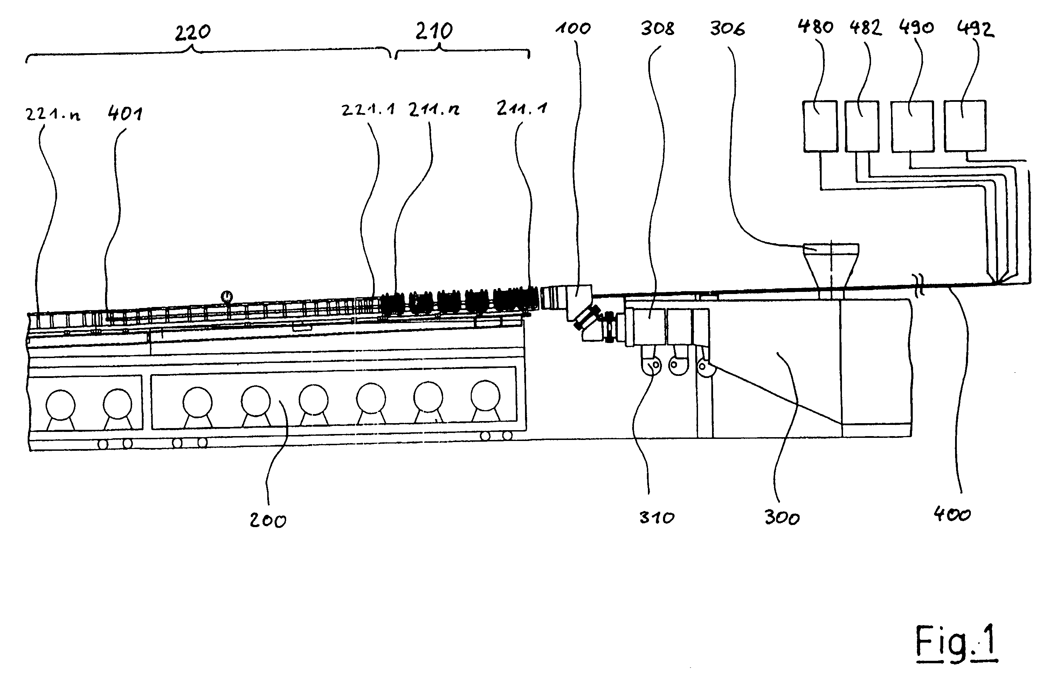

In Fig. 1 ist eine erfindungsgemäße Extrusionsvorrichtung dargestellt. Ein Extruder 300 ist vorgesehen, um Kunststoffschmelze bereitzustellen und durch ein Profilwerkzeug 100 zu pressen. Der Extruder 300 weist wenigstens einen über Heizbänder beheizten Zylinder 308 und wenigstens eine in dem Zylinder 308 angeordnete, rotierbare Schnecke zum Plastifizieren des an einem Einfülltrichter 306 aufgegebenen Kunststoffpulvers oder -granulats auf.

Zur Herstellung von Kunststoffhohlprofilen aus PVC wird ein Doppelschneckenextruder 300 eingesetzt, der einen Schneckendurchmesser D = 130 mm und eine wirksame Schneckenlänge 22D, also das 22fache des Schneckendurchmessers entsprechend 2860 mm aufweist. Bei der Verarbeitung von PVC kommen bevorzugt gegenläufige Doppelschneckenextruder oder speziell abgestimmte Einschneckenextruder zum Einsatz. Diese haben den Vorteil, dass der Kunststoff mit einem hohen Durchsatz plastifiziert und gefördert wird und daher nur kurz im Extruder verweilt, so dass die Gefahr thermischer Zersetzung des Kunststoffes reduziert wird. Da insbesondere in Doppelschneckenextrudern eine große Wärmemenge durch Dissipationsenergie in die Schmelze eingebracht wird, kann der Extruder 300 im vorderen Bereich auch Luftkühlungen 310 aufweisen, um eine Überhitzung des Zylinders und der darin enthaltenen Kunststoffschmelze zu verhindern.

Vor der Spitze des Extruders 300 befindet sich ein Profilwerkzeug 100, in welchem die Schmelze zu einem profilierten Kunststoffstrang geformt wird und dann an einer Profildüse 160 aus dem Profilwerkzeug 100 austritt.

In das Profilwerkzeug 100 ist eine Schäumlanze 400 eingeführt, die an folgende Versorgungseinrichtungen angeschlossen ist:

- eine Drucklufteinrichtung 480,
- eine Kühlwasserumwälzeinrichtung 482 mit Wasservor- und -rücklauf
- Schäummittelvorratsbehälter 490, 492.

Aus den Schäummittelvorratsbehältern 490, 492 werden zwei reaktive Komponenten getrennt voneinander durch die Schäumlanze 400 geleitet und beim Austritt aus einem Mischkopf an der Schäumlanzenspitze 401 miteinander gemischt, wobei sie unter Ausbildung eines Kunststoffschaums miteinander reagieren.

Ist es erforderlich, nicht nur eine Hohlkammer, sondern mehrere Hohlkammern des Kunststoffhohlprofils auszuschäumen, so wird zu jeder Hohlkammer eine separate Schäumlanze geführt. Die Schäumlanzen, seien es eine, zwei oder mehrere, können an gemeinsame Versorgungseinrichtungen 480, 482, 490, 492 angeschlossen sein.

Ein wesentliches Merkmal der Erfindung ist, dass die Schäumlanzenspitze 401 in einem Bereich der Kühl- und Kalibriereinrichtung 200 endet, in dem das Profil bereits auf eine Ausschäumtemperatur $T_A$ von etwa 30 °C abgekühlt ist. Bei dieser Temperatur ist das extrudierte Kunststoffhohlprofil so weit formstabil, das ein Aufquellen der Profilwandungen durch den mit der Schäumung verursachten Innendruck vermieden wird. Dazu wird das Kunststoffhohlprofil von außen durch das Kühlwasser in der Kühl- und Kalibriereinrichtung 200 gekühlt.

Die Kühlung der Schäummittel wird durch Wasserkühlung im Inneren der Schäumlanze 400 gewährleistet, um ein Aufheizen der Schäumlanze 400 und der darin geleiteten Schäummittel zu verhindern.

Die Länge der Schäumlanze 400 ist so gewählt, dass die Schäumlanze 400 so weit nach vorne in das Kunststoffhohlprofil hinein zu schieben ist, dass die Schäumlanzenspitze 401 im Bereich der Ausschäumtemperatur liegt, während ein hinteres Ende der Schäumlanze 400 immer noch innerhalb des Lanzenführungskanals 150 des Profilwerkzeugs 100 geführt ist. Die Schäumlanze 400 hat in der in den Figuren beschriebenen Ausführungsform eine Länge von etwa 6 m. Dabei ist die Schäumlanze 400 ausschließlich im Lanzenführungskanal 150 des Profilwerkzeugs 100 gelagert. Das aus dem Lanzenführungskanal 150 herausragende Ende der Schäumlanze 400 ist ungestützt, so dass grosse Durchbiegungen auftreten. Je nach wandstärken am Kunststoffhohlprofil, der Größe der auszuschäumenden Hohlkammer etc. liegt der Punkt, an dem die Schäumlanzenspitze 401 zu positionieren ist, um 3 m bis 5 m vor dem Profilwerkzeug 100. Um der Durchbiegung entgegenzuwirken, kann auf den Extruder eine Führungsbahn aufgesetzt sein. Diese ist vorzugsweise in dem gleichen Winkel α zur Horizontalen angestellt wie die Lanzenführungsachse 154, so dass die Führungsbahn und die Lanzenführungsachse 154 coaxial angeordnet sind. Der nach hinten aus dem Profilwerkzeug 100 ragende Teilbereich der Schäumlanze 400 kann auf der Führungsbahn aufliegen und wird dort abgestützt. Eine Gleitbeschichtung auf der Führungsbahn begünstigt die axiale Verschieblichkeit der Schäumlanze 400.

An der Schäumlanzenspitze 401 sind Sensoren angeordnet, um die an dem Ort der Schäummitteleinspritzung herrschenden Druck- und Temperaturverhältnisse überwachen zu können. Insbesondere weist die Schäumlanzenspitze 401 auch einen Ultraschallsensor auf, um einen Abstand zwischen der Schäumlanzenspitze 401 und dem sich ausbildenden Schaumkörper innerhalb des Kunststoffhohlprofils einzustellen und im fortlaufenden Betrieb zu wahren. Die miteinander gemischt aus dem Mischkopf der Schäumlanze 400 austretenden Schäummittelkomponenten reagieren bei richtig eingestellten Betriebsparametern der Extrusionsvorrichtung an einem Ort, der etwa 500 mm von der Schäumlanzenspitze 401 entfernt liegt. Durch diesen Abstand wird verhindert, dass sich die Schäumlanzenspitze 401 zusetzt.

In unmittelbarer Nähe der Profildüse 160 des Profilwerkzeugs 100 ist eine Kühl- und Kalibriereinrichtung 200 angeordnet. Der in plastisch verformbaren Zustand aus dem Profilwerkzeug 100 austretende profilierte Kunststoffstrang wird in der Kühl- und Kalibriereinrichtung 200 auf eine Ausschäumtemperatur unterhalb der Erweichungstemperatur des Kunststoffs abgekühlt. Dabei wird auch Formänderungen durch Schrumpfungen des abkühlenden Kunststoffs entgegengewirkt, um am Ende der Kühl- und Kalibriereinrichtung 200 ein Kunststoffhohlprofil mit den gewünschten geometrischen Endabmessungen zu erhalten.

Die Kühl- und Kalibriereinrichtung 200 setzt sich zusammen aus einer Vorkühl- und -kalibriereinrichtung 210 und einer sich anschließenden Nachkühl- und -kalibriereinrichtung 220.

Im Inneren der Kalibrier- und -kühleinrichtungen 210, 220 sind eine Vielzahl von Kalibrierblenden 221.1,...,221.n beabstandet nebeneinander angeordnet, wobei deren Anzahl bis zu 60 betragen kann.

Die Kalibrierblenden 221.1,...,221.n haben die Aufgabe, das noch warme und plastisch verformbare, aus dem Profilwerkzeug 100 ausgetretene Kunststoffhohlprofil 50 während des Kühlvorganges an ausgewählten Stellen der Außenkontur formgenau zu führen und zu kalibrieren. Dem Schrumpfen des Kunststoffhohlprofils 50 beim Abkühlen wird auch dadurch entgegengewirkt, dass im Bereich der Vorkühl- und -kalibriereinrichtung 210 Vakuumtanks 211.1,...,211.n angeordnet sind, an die ein Unterdruck angelegt wird, so dass sich eine Druckdifferenz zwischen dem Inneren des Hohlprofils 50 und dessen Außenkontur ergibt. Durch diesen Druckgradienten wird erreicht, dass sich die Außenkontur des Hohlprofils an die Kalibrierblenden 221.1,...,221.n maßgenau anlegt.

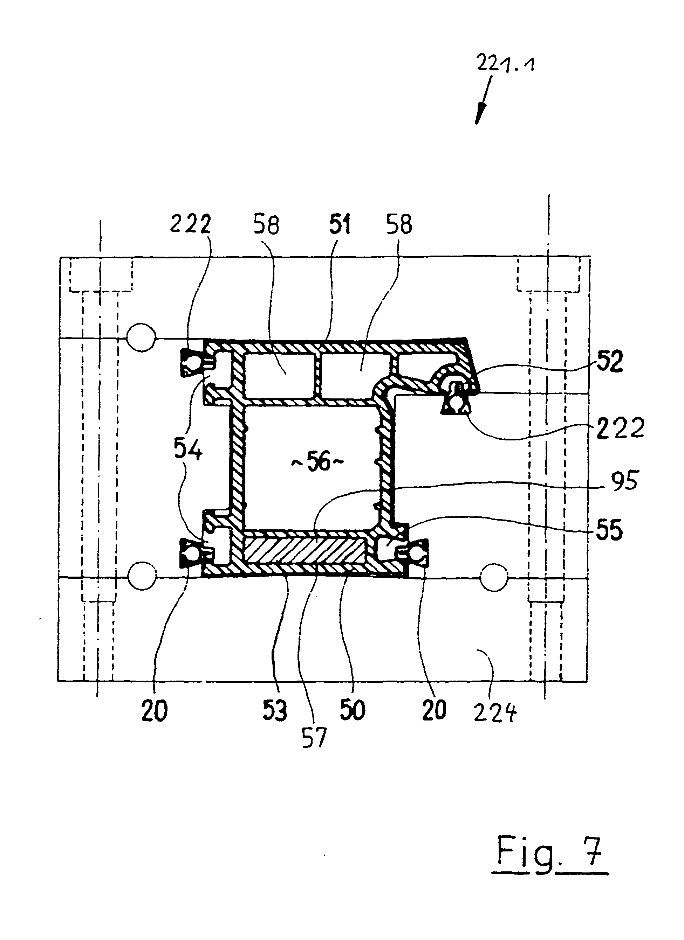

In Fig. 7 ist eine Kalibrierblende 221.1 mit einem darin geführten Profil 50 gezeigt. Jede Kalibrierblende kann einteilig aus einem einzelnen Kalibrierkörper 224 hergestellt sein, in den eine maßgenaue Profilquerschnittsausnehmung eingebracht ist, die von der jeweiligen Querschnittskonfiguration des herzustellenden Kunststoffhohlprofils 50 bestimmt wird. Sie kann aber auch mehrteilig und zerlegbar sein, so dass die Bearbeitung der Ränder der Profilquerschnittsausnehmung erleichtert ist. Die Profilquerschnittsausnehmungen der Kalibrierblenden 221.1,...,221.n sind dem Abkühlverhalten des Profils entsprechend geformt. So weisen die ersten Kalibrierblenden 221.1,....gegenüber der Profilquerschnittsausnehmung eine Vorspannung auf, d. h. sie wölben sich in die Profilquerschnittsausnehmung hinein. In die Profilquerschnittsausnehmung hinein sind an ausgewählten Stellen Kurzkalibrierkörper 222 gerichetet, um Profilabschnitte wie Nuten 52, 54, 55 nachzuformen, für die eine besonders genaue Maßhaltigkeit erreicht werden muß.

Hinter der Kühl- und Kalibriereinrichtung 220 ist eine nicht dargestellte Transporteinrichtung angeordnet, die das hergestellte endlose Profil kontinuierlich mit einer Abzugsgeschwindigkeit $v_A$ fördert.

Hinter der Transporteinrichtung ist eine Schneideinrichtung angeordnet, in der der fertige Kunststoffhohlprofilstrang abgelängt und einer Stapeleinrichtung übergeben wird.

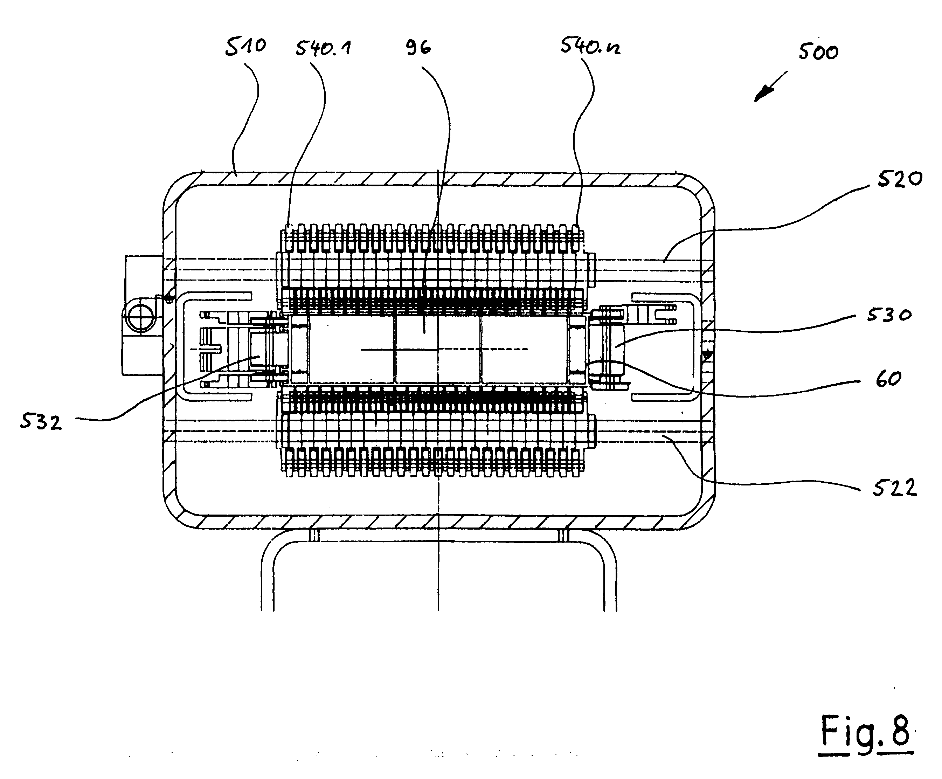

Zusätzlich zu der Nachkalibrier- und -kühleinrichtung 220 oder an deren Stelle kann eine Rollenkalibriereinrichtung 500 in der Kühl- und Kalibriereinrichtung 200 vorgesehen sein, die in Fig. 8 abgebildet ist. In einem geschlossenen Gehäuse 510 sind zwei parallele Achsen 520, 522 übereinander angeordnet. Auf den Achsen 520, 522 sind eine Vielzahl von umlaufenden Kalibrierrollen 540.1,...,540.n angeordnet. Über die Länge der Rollenkalibriereinrichtung 500 sind mehrere solcher Sätze von Kalibrierrollen 540.1,...,540.n, sowohl in der Ebene der oberen Achse 520, als auch in der Ebene der unteren Achse 522 angeordnet. In Extrusionsrichtung sind die Kalibrierrollen 540.1,..,540.n versetzt zu benachbarten Rollensätzen angeordnet, so dass sämtliche Bereiche der Oberfläche eines in die Rollenkalibriereinrichtung 500 eingeschobenen Kunststoffhohlprofils 60 von den Kalibrierrollen 540.1,...,540.n berührt werden. Die Ausschäumkammer 96 des Kunststoffhohlprofil 60 hat eine Größe von circa 65 x 55 cm. Durch die Kalibrierrollen 540.1,...,540.n werden die langen Wände des Kunststoffhohlprofils 60 so geformt, dass die gewünschten Endabmaße erreicht werden. Einer Formänderung im Bereich des Schaumkerns 96 wird ebenfalls entgegengewirkt. Die Seitenwände des Kunststoffhohlprofils 60 werden ebenfalls mit Druck beaufschlagt, der von seitlichen Kalibrierrollensätzen 530, 532 ausgeht. Bei den Kalibrierrollensätzen 530, 532 überbrücken breite Rollen jeweils die gesamte durchgehende Seitenwand des Kunststoffhohlprofils 60, während schmalere Rollen die Profilierung des übrigen Profils übernehmen. Ebenso wie die oberen und unteren Kalibrierrollen 540.1,...,540.n an den langen Seiten des Profils sind auch die seitlichen Kalibrierrollensätzen 530, 532 hintereinander angeordnet.

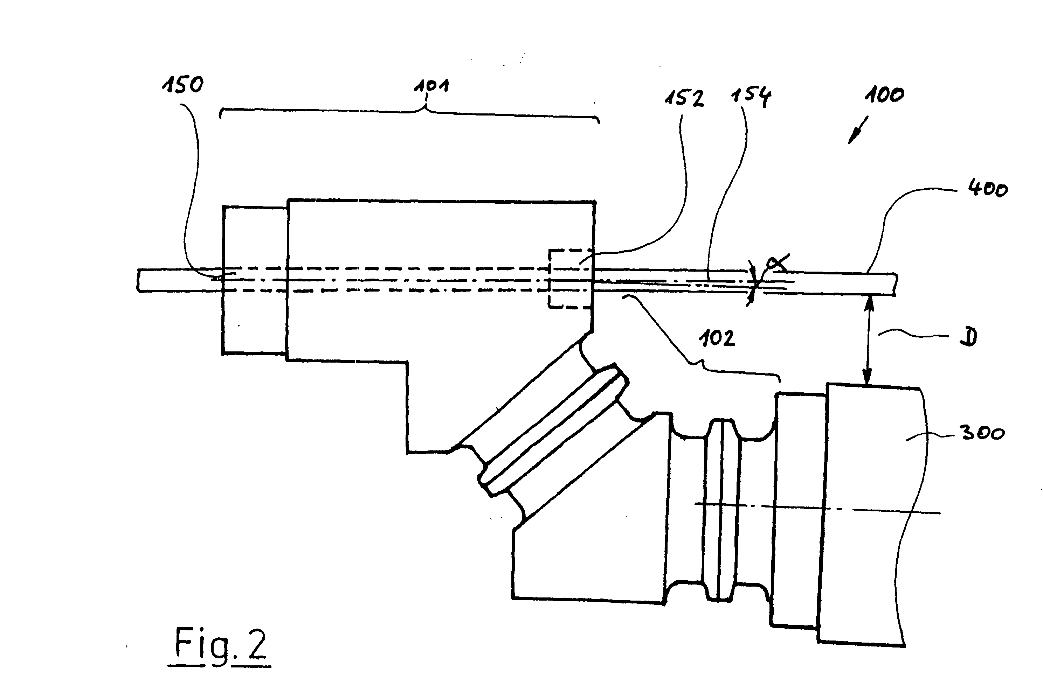

Das erfindungsgemäße, pistolenförmige Profilwerkzeug 100 setzt sich, wie insbesondere Fig. 2 zeigt, im wesentlichen aus einem Pistolenlauf 101 und einem Pistolenschaft 102 zusammen.

Der Pistolenlauf 101 weist im Inneren einen durchgängigen Lanzenführungskanal 150 auf. Am rückwärtigen, also der Profildüse 160 gegenüberliegenden Ende des Pistolenlaufs 101 ist der Lanzenführungskanal 150 zu einer Lanzeneintrittsöffnung 152 erweitert, um das Einschieben der Schäumlanze 400 in den Lanzenführungskanal 150 des Profilwerkzeugs 100 zu erleichtern. Zwischen der Außenseite des Extruders 300 und dem Umfang der Schäumlanze 400 ist in dem in der Fig. 2 gezeigten Ausführungsbeispiel des Profilwerkzeugs 100 ein Abstand D vorhanden, so dass ein Luftspalt zwischen Extruder 300 und Schäumlanze 400 ausgebildet ist. Die Schäumlanze ist damit axial frei beweglich.

Die Lanzenführungsachse 154 ist um einen Winkel α gegenüber einer Horizontalen, in Abzugsrichtung des Kunststoffhohlprofils, nach unten geneigt. Hierdurch läuft Flüssigkeit, die durch die Schäumlanze 400 in einen Hohlprofildüsenabschnitt injiziert wird, mit geringer Fließgeschwindigkeit von der Schäumlanzenspitze 401 weg, so dass ein Verkleben und/oder Verstopfen der Schäumlanzenspitze 401 beim Aufschäumen vermieden wird.

Der Pistolenschaft 102 ist direkt an den Extruder 300 angeschlossen und stellt eine schmelzeleitende Verbindung zu dem Pistolenlauf 100 her.

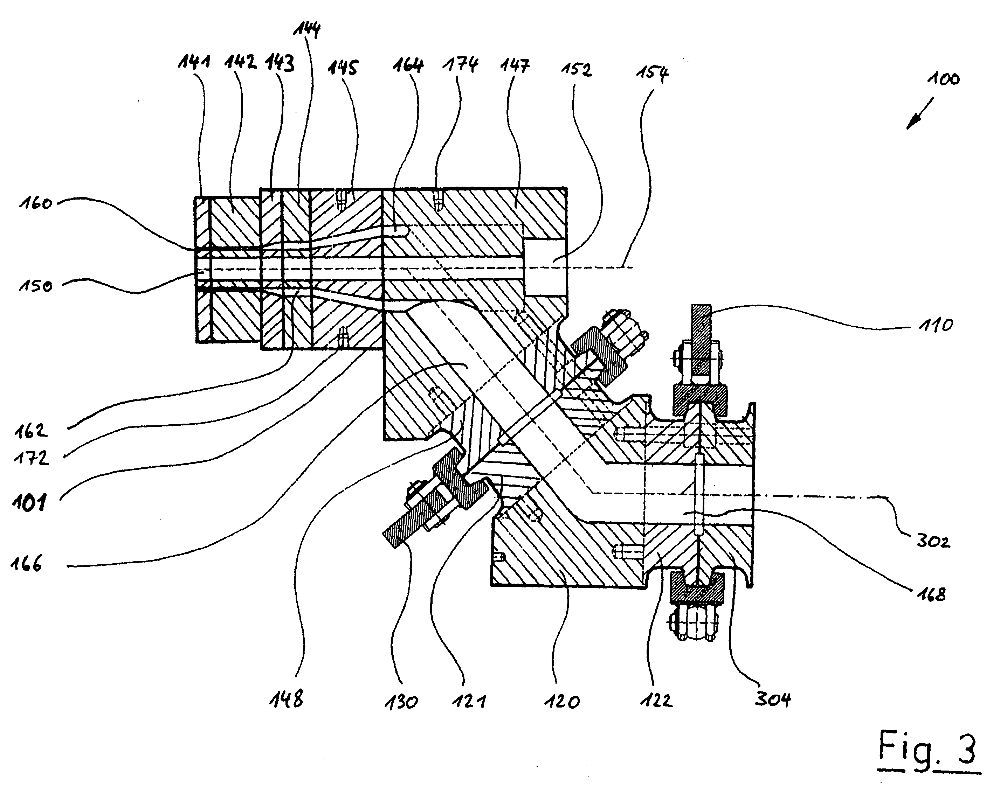

Wie insbesondere Fig. 3 zeigt, ist innerhalb des Pistolenschafts 102 ein Schmelzezuführungskanal 166 angeordnet. Dieser erstreckt sich von einer Schmelzeeintrittsöffnung 168 bis zu einem Schmelzeradialverteilerkanal 164. Der Schmelzezuführungskanal 166 ist zweifach gewinkelt, so dass die Schmelze aus der Ebene der Extruderachse 302 heraus umgeleitet wird.

Die Mittelachse des Pistolenschaftes 102 ist gegenüber der Extruderachse 302 um etwa 300 mm angehoben.

Der Pistolenschaft 102 umfasst in der in Fig. 3 dargestellten Ausführungsform einen Umlenkblock 120 mit einem Kupplungsring 121 im mittleren und einem Kupplungsring 122 im endseitigen Bereich. In dem Umlenkblock 120 wird die Schmelze von der Extruderachse 302 aus umgelenkt.

Der Kupplungsring 122 ist mittels eines Ringspannelements 110 mit einem kompatiblen Extruderkupplungsring 304 druckfest verbunden. Der Kupplungsring 121 ist über ein weiteres Ringspannelement 130 mit einem Kupplungsring 148 eines Verteilerblocks verbunden. Die Verbindung der einzelnen Bauteile über Kupplungsringe 148, 121, 133, 304 und Ringspannelemente 110, 130 ermöglicht eine einfache Fertigung des innenliegenden, gewinkelten Schmelzezuführungskanals 166.

Der Schmelzezuführungskanal 166 mündet in einen Schmelzeradialverteilerkanal 164. Dieser teilt, in einem Querschnitt senkrecht zu Lanzenführungsachse 154 betrachtet, den Fließweg für die Schmelze, führt diesen um den Lanzenführungskanal 150 herum und vereinigt die Fließwege jenseits des Lanzenführungskanals 150 wieder, so wie es von dem Wendelverteilern in Blasköpfen für die Folienextrusion an sich bekannt ist. Am vorderen Ende des Verteilerblocks 147 ist der Schmelzeradialverteilerkanal 164 ringförmig. Der Querschnitt des Schmelzeradialverteilerkanals 164 kann kreisringförmig sein; er kann aber auch bereits an den Querschnitt des herzustellenden Kunststoffprofils angenähert sein, also beispielsweise rechteckig sein. Zusätzlich wird die Schmelze aus der Richtung des Schmelzezuführungskanals 166 im mittleren Bereich des Pistolenschafts 102 in die Richtung der Lanzenführungsachse 154 umgelenkt.

Um die Schmelzeströmung zu optimieren und den Druck in der Schmelze zu reduzieren, schließt sich eine erste Reduzierplatte 145 an den Verteilerblock 164 an. Der Ringkanal in der Reduzierplatte 145 läuft in sich konzentrisch zu, d.h. die lichte Breite des Ringkanals nimmt ab; zugleich verengt sich der Ringkanal insgesamt trichterförmig. Die in dem Ringkanal geführte Schmelze wird dadurch zum einen in ihrem Druck gemindert und zum anderen näher an die Endabmaße der Profildüse herangeführt. In eine erste Fließkanalplatte 144 ist ein koaxialer Ringkanal eingearbeitet, in dem sich eine laminare Strömung ausbilden kann.

Das in Fig. 3 dargestellte Ausführungsbeispiel eines Profilwerkzeugs 100 weist eine weitere Reduzierplatte 142 und eine weitere Fließkanalplatte 142 auf. Den Abschluß bildet eine Düsenplatte 141, in die eine Profildüse 160 eingearbeitet ist, durch deren Ausbildung die Form eines extrudierten Kunststoffhohlprofils bestimmt ist.

Zum Ausgleich von Wärmeverlusten wird das Profilwerkzeug 100 über Heizpatronen 172, 174 und/ oder über nicht dargestellte Heizbänder temperiert.

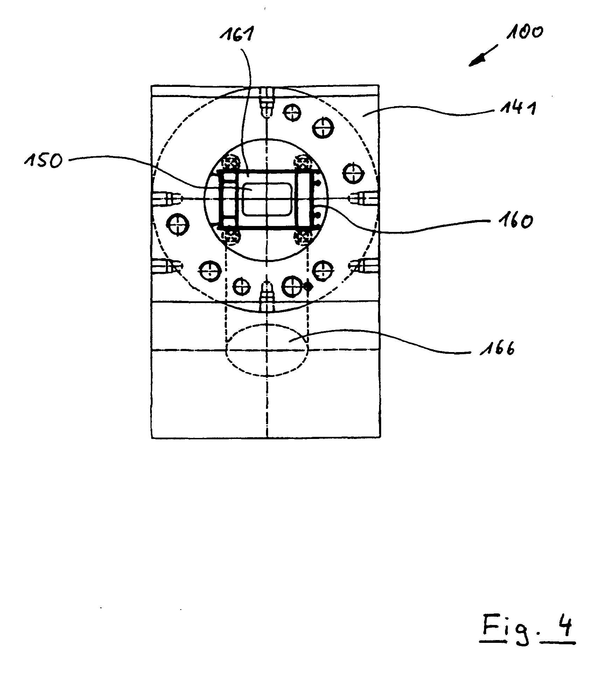

In Fig. 4 ist das Profilwerkzeug 100 in einer Draufsicht auf die Düsenplatte 141 mit der Profildüse 160 dargestellt. Ein Hohlprofildüsenabschnitt 161 der Profildüse 160 ist so angeordnet, dass er den Lanzenführungskanal 150 umschließt. Der Lanzenführungskanal 150 weist einen rechteckigen Querschnitt mit abgerundeten Ecken auf.

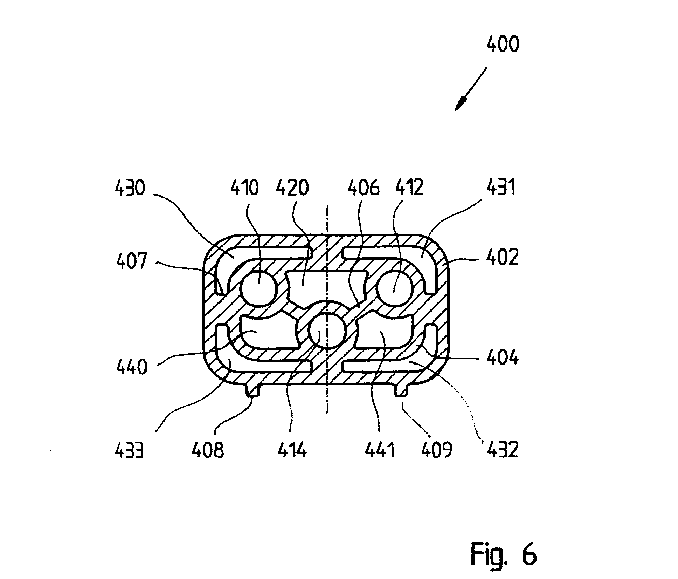

In das Profilwerkzeug 100 ist wenigstens eine Schäumlanze 400 für jede auszuschäumende Hohlkammer eines Profils eingeführt ist. Der Querschnitt der Schäumlanze 400 ist in Fig. 6 abgebildet. Die Schäumlanze ist aus einer AlMgSi-Knetlegierung, beispielsweise der Typen 6060 (AlMgSi0,5) oder 6005A (AlMgSi0,7), durch Strangpressen hergestellt.

Der Querschnitt setzt sich im wesentlichen aus einer Außenwandung 402 und einer Innenwandung 404 zusammen, die durch Stege 407 verbunden sind. Im Inneren sind weiterhin mehrere Rohrleitungen 410, 412, 414 vorgesehen, die an die Innenwandung 404 angelehnt oder in dieser teilweise integriert sind. Die Rohrleitungen 410, 412, 414 sind untereinander durch Aussteifungsstege 406 verbunden, um die Biegesteifigkeit der Schäumlanze 400 insgesamt zu erhöhen. Durch die Verbindung der Wandungen 402, 404 und der Rohrleitungen 410, 412, 414 über die Stege 406, 407 sind in dem Profilquerschnitt eine Vielzahl von geschlossenen Hohlprofilabschnitten gebildet, die zur Durchleitung von Flüssigkeiten und Gasen oder zum Einziehen von elektrischen Leitungen nutzbar sind.

In dem vorliegenden Ausführungsbeispiel sind die vier eckseitig zwischen Außenwandung 402 und Innenwandung 404 eingeschlossenen Hohlprofilabschnitte als Wasserrücklaufleitungen 430, 431, 432, 433 angeschlossen, durch welche Kühlwasser in die Kühlwasserumwälzeinrichtung 482 abfließen kann, das durch die mittig eingebettete Wasservorlaufleitung 414 bis zur Lanzenspitze 401 geführt ist. Die oberen Rohrleitungen werden als Schäummittelleitungen 410, 412 genutzt, durch welche die beiden Schäummittelkomponenten getrennt voneinander aus den Schäummittelvorratsbehältern 490, 492 bis zur Lanzenspitze 401 geführt werden.

Eine weitere Querschnittsausnehmung dient als Druckluftzuleitung 420. Die Druckluft tritt kurz vor dem Mischkopf an der Schäumlanzenspitze 401 durch wenigstens einen Druckluftauslass aus und hat die Aufgabe, die Schäumlanze zu umspülen und zu kühlen und darüber hinaus stehende Luft in einer auszuschäumenden Hohlkammer eines Kunststoffhohlprofils zu bewegen.

Um die Kühlung der Wandung der Hohlkammer auch von innen bewirken zu können und damit ein schnelleres Abkühlen des Kunststoffs auf die Schäumtemperatur zu erreichen, können statt oder zusätzlich zu Druckluft auch gekühlte Gase wie Kohlendioxid oder Stickstoff eingeleitet werden.

Da die Schäumlanze 400 sich infolge ihrer großen Länge durchbiegt und nicht berührungsfrei innerhalb einer Hohlkammer des extrudierten Kunststoffhohlprofils zu führen ist, ist die Schäumlanze 400 an einer Unterseite mit Auflagestegen 408, 409 versehen. Über die koaxialen Auflagestege ist die Schäumlanze 400 im Betrieb des Extrusionsvorrichtung auf einer Wandung des Kunststoffhohlprofil abgestützt. Die Gleitung zwischen Schäumlanze 400 und dem Kunststoffhohlprofil wird durch die schmalen Gleitstege 408, 409 erleichtert.

Die Druckluft kann auch durch nicht dargestellte Auslassdüsen austreten und ein Luftpolster gegenüber der Wandung des Kunststoffhohlprofil bilden, um das Gleiten zwischen Schäumlanze 400 und Kunststoffhohlprofil zu erleichtern. Wird die Druckluft zwischen den Gleitstegen 408, 409 eingeblasen, kann die Schäumlanze 400 mit einem dünnen Luftpolster von der darunter liegenden Wandung des Kunststoffhohlprofils abgehoben werden.

Ein weiterer Hohlraum in der Schäumlanze 400 dient als Kabelkanal 440, um Signale von Sensoren an der Lanzenspitze 401 an eine Überwachungseinrichtung für die Extrusionsvorrichtung zu leiten.

Ein weiterer Hohlraum kann als Entlüftungsleitung 441 verwendet werden, um zu verhindern, dass bei der Expansion des Schaums in der Hohlkammer ein Überdruck entsteht.

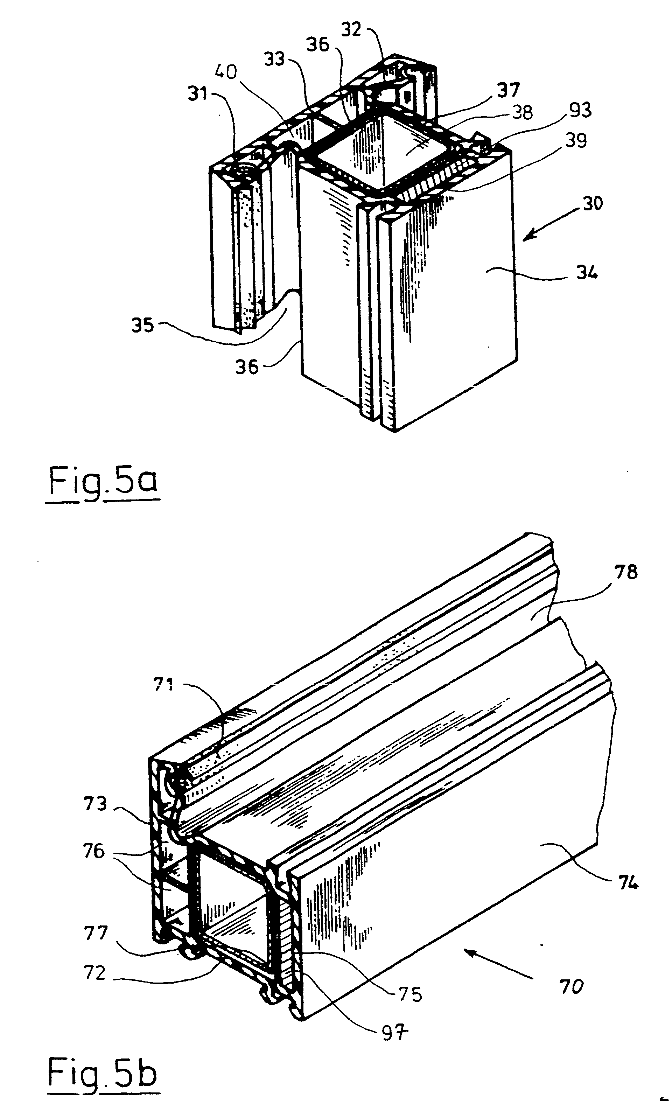

In den Fig. 5a und 5b sind ausgewählte Kunststofffensterprofile dargestellt, die mit der erfindungsgemäßen Extrusionsvorrichtung hergestellt wurden.

In Fig. 5a ist ein Kunststofffenster-Kämpferprofil 30 gezeigt. Es besteht aus einem Kämpferaußenprofil 33 und einem Kämpferinnenprofil 34. Es weist eine Kämpferaußenprofilausnehmung 35 und eine Kämpferinnenprofilwand 36 auf. Im Inneren des Kämpferinnenprofils 34 ist mit 38 eine Rahmenkammer bezeichnet. In die Rahmenkammer 38 ist ein Kämpfermetallprofil 37 eingeführt. Das Kämpferinnenprofil 34 weist darüber hinaus eine Hohlkammer 39 auf. Die Hohlkammer 39 unterscheidet sich von den mit 40 bezeichneten Feuchtigkeitsleitkammern des Außenprofils dadurch, dass sie über keine versteifenden und die Kammer teilenden Zwischenwände verfügt, denn im Inneren der Hohlkammer 39 ist ein mit 93 bezeichneter Kunststoffisolierschaumkörper angeordnet, der wärme- und schallisolierende Eigenschaften hat und der darüber hinaus das Kämpferinnenprofil 34 so verstärkt, dass, wie bereits beschrieben, die Zwischenwände entfallen können. Für eine einzusetzende Glasscheibe sind darüber hinaus am Kämpferaußenprofil mit 31 und 32 bezeichnete Kämpferdichtungsprofile vorgesehen.

In Fig. 5b ist ein Kunststoffenster-Rahmenprofil 70 gezeigt. Es weist ein Rahmenaußenprofil 73 mit Feuchtigkeitsleitkammern 76 auf. An das Rahmenaußenprofil 73 schließt sich ein Rahmeninnenprofil 74 an, in dessen Hohlkammer 75 ein mit 77 bezeichnetes Rahmenmetallprofil eingeführt ist. Am Rahmenaußenprofil 73 ist darüber hinaus in einer entsprechenden Ausnehmung ein Rahmendichtungsprofil 71 festgeklemmt. Das Rahmeninnenprofil 74 ist in seiner Hohlkammer 75 mit dem bereits erwähnten Kunststoffisolierschaumkörper 97 ausgefüllt.

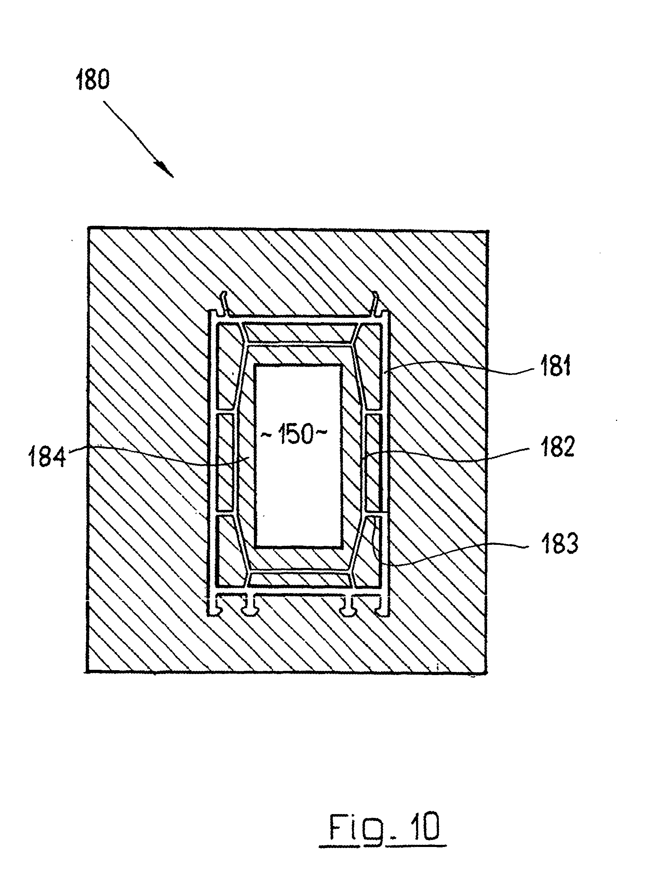

Ein in Fig. 10 dargestelltes Profilwerkzeug 180 weist wenigstens auf:

- eine Profilwandungsausnehmung 181, die einen Kernbereich 184 zur Ausbildung wenigstens einer Hohlkammer in dem Kunststoffhohlprofil umschließt, und
- eine in dem Kernbereich 184 eingebrachte Schaumkörperhilfswandungsausnehmung 182, die wenigstens entlang eines Teils der Profilwandungsausnehmung 181 beabstandet zu dieser angeordnet ist und mit dieser über wenigstens eine Stegausnehmung 183 verbunden ist.

Bei diesem Werkzeug ist in etwa parallel zu der Profilwandungsausnehmung 181 eine zweite Ausnehmung, die Schaumkörperhilfswandungsausnehmung 182, angeordnet. Die beiden Ausnehmungen 181, 182 sind über Stegausnehmungen 183 miteinander verbunden und bilden jeweils ringförmige Schmelzekanäle um den Kernbereich 184, der zur Ausbildung der Hohlkammer dient.

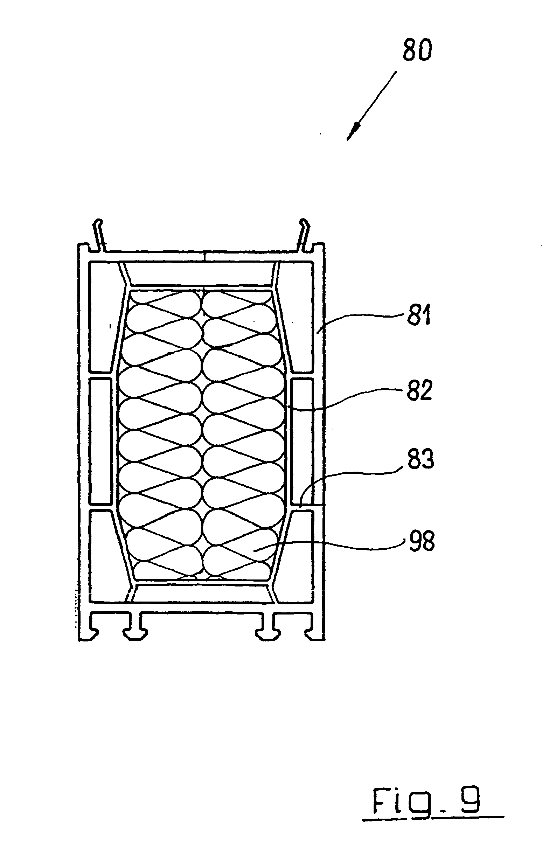

Die in Fig. 9 dargestellte Ausführungsform zeigt im Querschnitt ein ausgeschäumtes Kunststoffhohlprofil 80, das mit dem in Fig. 10 dargestellten Profilwerkzeug 180 hergestellt ist und dass besonders für die Anwendung des erfindungsgemäßen Schäumverfahrens geeignet ist.

Das Kunststoffhohlprofil 80 ist so ausgebildet, wie der spätere Verwendungszweck des Kunststoffhohlprofils es üblicherweise erfordert; eine spezielle Anpassung der Geometrie der Profilwandung 81 an das erfindungsgemäße Verfahren ist insofern nicht erforderlich. Das Kunststoffhohlprofil 80 weist wenigstens eine Hohlkammer auf, die von einer Profilwandung 81 gebildet ist.

Die Hohlkammer ist in der Profilwandung 81 über wenigstens einen Teil ihres Querschnittumfangs mit einer Schaumkörperhilfswandung 82 ausgekleidet. Die Schaumkörperhilfswandung 82 ist über Stege 83 beabstandet von der Profilwandung 81 angeordnet. Die Wandstärke der Schaumkörperhilfswandung 82 ist kleiner als die der Profilwandung 81 und beträgt vorzugsweise etwa die Hälfte der Wandstärke der Profilwandung 81. Das Schäummittel wird in den durch die Schaumkörperhilfswandung 82 ausgekleideten Hohlraum eingeleitet und beginnt dort mit Einsetzen der chemischen Reaktion zu expandieren. Ist der Hohlraum vollständig ausgefüllt, baut sich ein Innendruck auf, der eine Kraft auf die Schaumkörperhilfswandung 82 ausübt. Diese kann sich insbesondere aufgrund ihrer relativ dünnen Wandstärke von ca. 1 mm bis 2 mm verformen, so dass der Druck in der Hohlkammer abgebaut wird und Einflüsse auf die Profilwandung 81 verhindert werden. Damit bleibt die Profilwandung 81 so maßgenau, wie sie vor dem Einspritzpunkt des Schäummittels durch die Kühl- und Kalibriereinrichtung geformt worden ist. Die durch das Schäumen verursachte Verformung der innenliegenden Schaumkörperhilfswandung 82 ist nach außen nicht sichtbar.

Diese Ausbildung eines Kunststoffhohlprofils 80 hat insbesondere den Vorteil, dass das Schäummittel im Überschuss injiziert werden kann, d. h. es kann mehr Schäummittel pro Zeit eingespritzt werden als es zum Füllen der Hohlkammer bei der gegebenen Abzugsgeschwindigkeit rechnerisch erforderlich wäre. Damit ist stets eine vollständige Füllung der Hohlkammer und eine gleichmäßige Porenausbildung gewährleistet. Der durch die Überdosierung entstehende Überdruck des sich ausbildenden Kunststoffisolierschaumkörpers 98 in der Hohlkammer wird über die definiert herbeigeführte Verformung der Schaumkörperhilfswandung 82 und der Stege 83 kompensiert, ohne die Außenkontur des Kunststoffhohlprofils 80 zu beeinflussen.

Die Herstellung eines wenigstens teilweise ausgeschäumten Kunststoffhohlprofils mit Hilfe der Extrusionsvorrichtung der Erfindung wird nachfolgend erläutert.

Das Verfahren umfasst wenigstens die im Anspruch 16 definierten Schritte.

Am Einfülltrichter 306 wird granuliertes oder pulverisiertes Polyvinylchlorid (PVC) aufgegeben. Das Polyvinylchlorid wird über die Zylinderwandheizung des Extruders 300 und durch die über Scherung der Kunststoffmasse an der Schnecke erzeugte Dissipationsenergie erwärmt und bei einer mittleren Massetemperatur von 170° bis 200°C im Extruder 300 aufgeschmolzen.

Die PVC-Schmelze wird aufgrund der Rotation der Schnecke kontinuierlich in das Profilwerkzeug 100 gedrückt. Dort fließt es durch den Schmelzeeintrittsöffnung 168 und wird in dem Umlenkblock 120 um einen Winkel von etwa 45° gegenüber der Horizontalen umgelenkt. Weiterhin fließt die Schmelze durch den innerhalb des Pistolenschafts 102 angeordneten Schmelzezuführungskanal 166 bis zum Schmelzeradialverteilerkanal 164. Dort wird die Schmelze wiederum gegenüber der Horizontalen umgelenkt und so geteilt, dass ein Teil der Schmelze in Extrusionsrichtung links und der andere Teil in Extrusionsrichtung rechts um den Lanzenführungskanal 150 herum läuft. In einem oberhalb des Lanzenführungskanals 150 liegenden Bereich des Schmelzeradialverteilerkanals 164 vereinigen sich die Schmelzeteilströme wieder und treten in den Schmelzeringkanal 162 ein, der sich bis zur Profildüse 160 erstreckt und innerhalb dessen der Lanzenführungskanal 150 angeordnet ist. Die Heizpatronen in dem Werkzeug 100 sorgen dafür, dass die Schmelze von Polyvinylchlorid die gewählte Temperatur beibehält und die Viskosität der Schmelze nicht zu weit ansteigt.

Am Austritt aus dem Profilwerkzeug 100 wird an der Profildüse 160 aus der PVC-Schmelze das Kunststoffhohlprofil 50 geformt, das mit einer Extrusionsgeschwindigkeit $V_E$ aus dem Profilwerkzeug 100 heraustritt. Bestimmt wird die Extrusionsgeschwindigkeit $V_E$ durch die Geometrie der Schnecke des Extruders und des Profilwerkzeugs 100 sowie durch die Verfahrensparameter Schneckendrehzahl und Zylinderwandtemperatur.

Der aus der Düse 160 des Profilwerkzeugs 100 heraustretende Strang des Kunststoffhohlprofils wird durch die Kühl- und Kalibriereinrichtungen 210, 220 geleitet und von der Transporteinrichtung mit einer Abzugsgeschwindigkeit $V_A$ gefördert. Die Abzugsgeschwindigkeit $V_A$ ist vorzugsweise gleich der Austrittsgeschwindigkeit $V_E$ am Extruder. Sie kann aber auch geringfügig höher sein, so dass mit der dadurch bewirkten Verstreckung ein Durchhängen des noch weichen Hohlprofils unmittelbar hinter der Düse vermieden und im Zusammenspiel mit den Kühl- und Kalibriereinrichtungen 210, 220 eine verbesserte Maßhaltigkeit erreicht wird. Die Abzugsgeschwindigkeit $V_A$ beträgt etwa 2 m/min. Sie kann je nach Gestaltung des extrudierten Kunststoffhohlprofils und in Abhängigkeit von anderen Verfahrensparametern zwischen 1 und 8 m/min betragen.

Mit der gewählten Abzugsgeschwindigkeit $V_A$ bewegt sich das Kunststoffhohlprofil 50 durch die Vorkalibrier- und -kühleinrichtung 210 mit den Vakuumtanks 211.1,...,211.n und durch die Nachkühl- und -kalibriereinrichtung 220 mit den Kalibrierblenden 221.1,..., 221.n.

In das auf die beschriebene Weise extrudierte Kunststoffhohlprofil wird eine Schäumlanze 400 eingeführt. Hierzu wird die Schäumlanze 400 in die Lanzeneintrittsöffnung 152 des Profilwerkzeugs 100 eingeführt und durch den Lanzenführungskanal 150 hindurch bis in eine Hohlkammer des aus der Profildüse 160 heraustretenden Kunststoffhohlprofilstrangs geschoben.

Die Schäumlanze 400 wird unter kontinuierlicher Temperaturmessung mittels des an der Schäumlanzenspitze 401 angeordneten Temperatursensors so weit in das Kunststoffhohlprofil hinein geschoben, bis die Schäumlanzenspitze 401 an einer Stelle positioniert ist, an der die Temperatur des sie umgebenden Kunststoffhohlprofils bis auf die gewählte Ausschäumtemperatur herabgesetzt worden ist. Diese Position der Schäumlanzenspitze 401 liegt üblicherweise innerhalb der Kühl- und Kalibriereinrichtung 200, so wie in Fig. 1 gezeigt. Aufgrund der großen Länge des aus dem Profilwerkzeug 100 ragenden Abschnitts der Schäumlanze 400 kommt es zu Durchbiegungen, so dass die Schäumlanzenspitze 401 sich bis auf die Wandung des Kunststoffhohlprofils absenkt.An der Position der Schäumlanzenspitze 401 ist die Massetemperatur des PVC-Kunststoffs mit Hilfe des in der Kühl- und Kalibriereinrichtung 200 umlaufenden Kühlwassers auf eine Ausschäumtemperatur $T_A$ von 25° ... 50°C herabgesetzt. Bei dieser Temperatur ist der Kunststoff so fest, dass eine Verformung des Kunststoffhohlprofils durch die aufliegende Schäumlanzenspitze 401 vermieden wird.

Mit Hilfe der innerhalb des Kunststoffhohlprofils positionierten Schäumlanze 400 wird in eine Hohlkammer des Kunststoffhohlprofils das Gemisch aus den Reaktionskomponenten zur Herstellung von Polyurethanschaum injiziert. Das in der Schäumlanze 400 bis zur Schäumlanzenspitze 401 geleitete Gemisch oder die einzeln bis zur Schäumlanzenspitze geführten Komponenten werden durch die Wasserkühlung innerhalb der Schäumlanze 400 bis zum Austritt aus der Lanze auf einer Schäummitteltemperatur $T_s$ = 25°C bis 35°C gehalten.

Die Schäummitteltemperatur ist durch die Wasserumlaufkühlung innerhalb der Schäumlanze 400 vorzugsweise bis auf 25° herabgesetzt, um eine frühzeitige Reaktion des Schäumgemisches unmittelbar vor der Schäumlanzenspitze 401 zu vermeiden. Um weiterhin zu verhindern, dass es zu einer Reaktion der Schäummittelkomponenten direkt bei der Schäumlanzenspitze 401 und damit zu einem Verkleben derselben kommt, wird während der Profilextrusion mit dem Ultraschallsensor an der Schäumlanzenspitze 401 laufend der Abstand zwischen Spitze und der sich schräg nach oben ausbildenden Schaumfront gemessen. Bei der genannten Schäummitteltemperatur beträgt die Reaktionszeit des injizierten Gemisches 15 s. Bei einer Abzugsgeschwindigkeit $V_A$ von 2 m·min$^{-1}$ wird das reaktive Schäummittelgemisch innerhalb der Zeitspanne von 15 s um 500 mm von der Schäumlanzenspitze 401 weg bewegt. Dieser Abstand ist ausreichend, um ein Zusetzen des Mischkopfes an der Schäumlanze 400 zu verhindern.

Wird ein geforderter Mindestabstand unterschritten, kann die axial frei bewegliche Schäumlanze 400 von der Rückseite des Profilwerkzeugs 100 zurückgezogen werden. Dies kann auch automatisch über elektrische Antriebe geschehen. Sollte es dennoch während des Extrusionsbetriebes zu Störungen wie dem Zukleben der Schäumlanzenspitze 401 kommen, so kann die Schäumlanze 400 vollständig aus dem Kunststoffhohlprofil und aus dem Profilwerkzeug 100 herausgezogen werden, ohne dass der Extrusionsvorgang unterbrochen bzw. das Werkzeug zerlegt werden muss.

Die Druckluft tritt kurz vor dem Mischkopf an der Schäumlanzenspitze 401 durch wenigstens einen Druckluftauslass aus und hat die Aufgabe, die Schäumlanze zu umspülen und zu kühlen und darüber hinaus stehende Luft in einer auszuschäumenden Hohlkammer eines Kunststoffhohlprofils zu bewegen. Um die Kühlung der Wandung der Hohlkammer auch von innen bewirken zu können und damit ein schnelleres Abkühlen des Kunststoffs auf die Schäumtemperatur zu erreichen, können statt oder zusätzlich zu Druckluft auch gekühlte Gase wie Kohlendioxid oder Stickstoff eingeleitet werden.

Die Schäumlanze kann von wenigstens einer berührungslosen Lanzenhaltevorrichtung im Inneren der Hohlkammer zentriert und gehalten sein. Hierzu wird ein Magnetfeld um das Kunststoffhohlprofil herum erzeugt, das die darin eingeführte Schäumlanze positioniert. Die Schäumlanze ist hierzu wenigstens über eine Teil ihrer Länge mit magnetischen Führungshilfen versehen.

Auch kann Stützgas, insbesondere Druckluft, durch eine Rohrleitung der Schäumlanze 401 geführt werden und über Perforationen am Außenmantel der Schäumlanze 400 austreten. Dadurch stützt sich die Schäumlanze auf einem Druckgaspolster gegen die Innenwandung der Hohlkammer ab. Es wird vermieden, dass die aufgrund der Schwerkraft herabhängende Schäumlanzenspitze das Kunststoffhohlprofil verformt oder beschädigt.

Reaktionskomponenten für schäumbares Polyurethan sind Isocyanate und Wasser oder Carbonsäuren. Polyurethanschäume entstehen bei der Polyaddition von Wasser an Isocyanatgruppen unter Abspaltung von blähend und schaumbildend wirkendem Kohlendioxid, gemäß folgendem Reaktionsschema:

$$R\text{-}NCO + HOH \rightarrow R\text{-}NH_2 + CO_2 \uparrow$$

Die Umsetzung von Isocyanat mit Carbonsäuren läuft nach folgendem Reaktionsschema ab:

$$R\text{-}NCO + R'\text{-}COOH \rightarrow R\text{-}CO\text{-}NH\text{-}R' + CO_2 \uparrow$$

Durch die Wahl verschiedener Reste R, R' kommen vielfältige Verknüpfungsarten zustande. Mit Polyalkylenglykolethern als Iolen und Wasser als Reaktionskomponente gelangt man zu PUR-Weichschäumen, mit Polyolen und Treibgasen aus Chlorfluorkohlenwasserstoffen erhält man PUR-Hartschaumstoffe. Zusätzlich benötigte Hilfsstoffe bei der Polyaddition sind Katalysatoren, Emulgatoren, Schaumstabilisatoren (bes. Polysiloxan-Polyether-Copolymere) und gegebenenfalls Flammschutzmittel.

Bevorzugt werden Polyole (Polyalkohole) mit Isocyanaten als Schäummittel injiziert. Die Reaktion des Gemisches aus den beschriebenen Reaktionskomponenten zu einem Polyurethanschaum erzeugt einen die Hohlkammer gleichmäßig ausfüllenden Kunststoffisolierschaumkörper.

Zur Erreichung einer gewünschten Porenanzahl und -größe in dem ausgehärteten Schaum hat es sich als besonders vorteilhaft erwiesen, die Polyol-Komponente mit 20 Volumen-% Luftblasen zu befrachten. Diese werden unmittelbar vor dem anschließenden Mischen mit der Isocyanat-Komponente und dem Injizieren des Schäummittels durch die Schäumlanze in die Hohlkammer fein verteilt eingebracht und dadurch bis zum Einspritzpunkt mitgerissen, ohne dass die Luftbläschen sich als Gasportion im Mischungssystem absetzen konnten. Das Polyol wird mit dem Isocyanat in einem Verhältnis von 100 zu 120 bis 160 Gewichtsteilen gemischt, wobei ein Mischungsverhältnis von 100:140 Gewichtsteilen bevorzugt ist. Als besonders geeignet hat sich die Verwendung eines Polyols erwiesen, das bei 25 °C folgende Eigenschaften aufweist:

- eine OH-Zahl von 300 ... 400 mg KOH/g, vorzugsweise 350 mg KOH/g,
- eine Viskosität von 200...400 mPas, vorzugsweise 300 mPas
- eine Dichte (ohne Luftbefrachtung) von 1,02 bis 1,08 g/cm$^3$, vorzugsweise 1,05 g/cm$^3$

und das mit einem Isocyanat vermischt wird, das folgende Eigenschaften aufweist:

- 25 bis 40 % Cyanat (NCO), vorzugsweise 31 % NCO,
- eine Viskosität von 160 bis 260 mPas, vorzugsweise 210 mPas
- eine Dichte von 1,20 g/cm$^3$ bis 1,30 g/cm$^3$, vorzugsweise 1,23 g/cm$^3$

Die Komponenten werden unmittelbar an der Lanzenspitze über ein an sich bekanntes statisches Mischrohr miteinander gemischt, wodurch die Polyurethan-Reaktion beginnt. Bei einer Mischung der genannten bevorzugten Komponenten im genannten Verhältnis beginnt die Reaktion 10 bis 20 sec nach dem Mischen. Nach etwa 150 bis 240 Sekunden ist das Reaktionsprodukt klebfrei.

Erhalten wird ein $CO_2$-getriebener Polyurethan-Hartschaum mit einer gleichmäßigen Porendichte, der eine Dichte von 60 bis 65 g/cm$^3$, vorzugsweise

$62,5$ g/cm$^3$ aufweist.

Während des Extrusions- und Profilierungsprozesses des Kunststoffhohlprofils entstehende Luft in der Hohlkammer wird durch die Entlüftungsleitung 441 nach außen abgeführt.

Anschließend durchläuft der ausgeschäumte Bereich des Kunststoffhohlprofils die verbleibende, vor der Schäumlanzenspitze 401 liegende Strecke der Nachkühl- und -kalibriereinrichtung 220.

Mit Hilfe der Kalibrierblenden 221.1 ... 221.n wird, wie Fig. 7 zeigt, ein Kunststoffhohlprofil 50 so kalibriert, dass die entsprechenden Ausnehmungen bzw. die glatten Außenseiten des mit 51 bezeichneten Rahmenaußenprofils und des mit 53 bezeichneten Rahmeninnenprofils die geforderte Maßhaltigkeit aufweisen. Das Rahmenaußenprofil 51 stellt den später sichtbaren Kämpfer und das Rahmeninnenprofil 53 den später sichtbaren Sichtrahmen dar. Ausgebildet werden auch die bereits beschriebenen Feuchtigkeitsleitkammern, die hier mit 58 bezeichnet sind. Im Inneren des Hohlprofils 50 befindet sich eine mit 56 bezeichnete Rahmenkammer. Mit 54 und 55 bezeichnete Längsnuten werden ebenso wie die anderen Nuten, wie bereits beschrieben, durch die Kurzkalibrierkörper 222 entsprechend kalibriert. Es ist besonders deutlich zu sehen, dass die Hohlkammer 57 durch den sich jetzt nach und nach abkühlenden Polyurethanschaum zu einem Kunststoffisolierschaumkörper 95 umbildet. Dieser Kunststoffisolierschaumkörper 95 ist nur eingeschäumt; er geht mit dem Polyvinylchlorid des Kunststoff-Rahmenprofils keine Verbindung ein und lässt sich leicht davon lösen; beispielsweise beim Recycling des Profilwerkstoffs.

Der Kunststoffisolierschaumkörper 95 erhöht die Steifigkeit des Kunststoffhohlprofils. Damit kann insbesondere bei Profilen für den Bau von Kunststofffenstern auf die Einlage von Stahlverstärkungen verzichtet werden.

Das abgekühlte Kunststoffhohlprofil verlässt dann die Kühlund Kalibriereinrichtung 220 und gelangt auf die Transporteinrichtung. Bis zu diesem Punkt ist der Herstellungsprozeß kontinuierlich erfolgt, d. h. es wurde mit konstanter Extrusionsgeschwindigkeit $V_E$ ein endloses Kunststoffhohlprofil erzeugt, das fortlaufend mit konstanter Abzugsgeschwindigkeit $V_A$ durch die Kühl- und Kalibrierstrecken 210, 220 gefördert wird. Auch das Ausschäumen geschieht durch fortwährendes, ununterbrochenes Einspritzen von Schäummittel-Gemisch.

Erst das Schneiden erfolgt nicht mehr andauernd, sondern in einem bestimmten Takt. Die Kunststoffhohlprofile werden mit Hilfe einer Schneideinrichtung auf Länge geschnitten, wodurch die beschriebenen Kunststofffenster-Rahmenprofile erhalten werden, die danach der Stapeleinrichtung zugeführt werden.

**Patentansprüche**

**1.** Extrusionsvorrichtung zur Herstellung von ausgeschäumten Kunststoffhohlprofilen (30; 50; 60; 70; 80), die wenigstens folgende Einzelteile aufweist:

- einen Extruder (300) zur Aufbereitung und Zuführung einer Kunststoffschmelze;

- ein mit dem Extruder (300) an einer Schmelzeintrittsöffnung (168) schmelzeleitend verbundenes Profilwerkzeug (100), das eine Pröfildüse (160) mit wenigstens einem Hohlprofildüsenabschnitt (161) umfasst,

- wenigstens eine Schäumlanze (400), die wenigstens teilweise innerhalb eines an der Profildüse (160) mündenden Schmelzeringkanals (162) und koaxial zu einer Abzugsrichtung des aus der Profildüse (160) austretenden Kunststoffhohlprofils (30; 50; 60; 70; 80) angeordnet ist,

wobei das Profilwerkzeug pistolenförmig ausgebildet ist mit folgenden Einzelheiten:

- einem Pistolenschaft (102) mit einem Schmelzezuführungskanal (166), welcher an die Schmelzeaustrittsöffnung des Extruders (300) anschließbar ist und in einem den Lanzenführungskanal (150) einschließenden Schmelzeradialverteilerkanal (164) mündet; und

- einem Pistolenlauf (101) mit einem vom dem Schmelzeradialverteilerkanal (164) zu der Profildüse (162) verlaufenden Schmelzeringkanal (162) und mit einem sich durchgängig von einer Lanzeneintrittsöffnung (152) bis zu der Profildüse (160) erstreckenden Lanzenführungskanal (150)

und wobei die Lanzenführungsachse (154) und die Bahn des Kunststoffhohlprofils in der Kühl- und Kalibriereinrichtung (200) gegenüber einer Horizontalen in einem Winkel $\alpha = 1 ... 10°$ in Abzugsrichtung nach unten geneigt sind.

**2.** Extrusionsvorrichtung nach Anspruch 1, **dadurch gekennzeichnet, dass** die Lanzenführungsachse (154) und die Bahn des Kunststoffhohlprofils in der Kühl- und Kalibriereinrichtung (200) gegenüber einer Horizontalen in einem Winkel $\alpha = 1 ... 1,5°$, insbesondere $1,35°$, in Abzugsrichtung nach unten geneigt sind.

**3.** Extrusionsvorrichtung nach Anspruch 1 oder 2, **dadurch gekennzeichnet, dass** die Schäumlanze (110) mit ihrem Außenumfang einen radialen Abstand von dem Außenumfang des Extruders (300) wahrt.

**4.** Extrusionsvorrichtung nach Anspruch 1 oder 2, **dadurch gekennzeichnet, dass** die Schäumlanze (110) auf einer Führungsbahn gleitbar und axial verschieblich gelagert ist.

**5.** Extrusionsvorrichtung nach Anspruch 4, **dadurch gekennzeichnet, dass** die Führungsbahn an dem Außenumfang des Extruders (300) angeordnet ist.

**6.** Extrusionsvorrichtung nach einem der Ansprüche 1 bis 5, **dadurch gekennzeichnet, dass** die Schäumlanzenspitze (401) eine Ultraschallsonde und/oder einen Temperatursensor aufweist.

**7.** Extrusionsvorrichtung nach einem der Ansprüche 1 bis 6, **dadurch gekennzeichnet, dass** die Schäumlanze (400) einen einteiligen Profilquerschnitt aufweist und dass in der Schäumlanze (400) folgende Leitungen geführt sind:

- eine erste Schäummittelleitung (410);
- eine zweite Schäummittelleitung (412);
- eine Wasservorlaufleitung (414); und
- wenigstens eine wasserrücklaufleitung (430, 431, 432, 433);

**8.** Extrusionsvorrichtung nach Anspruch 7, **dadurch gekennzeichnet, dass** die Schäummittelleitungen (411, 412) an der Schäumlanzenspitze (401) münden und dass die Schäumlanzenspitze (401) mit einem statischen Mischrohr versehen ist, das in seinem Inneren eine Vielzahl von Umlenkplatten enthält und in welchem wenigstens zwei durch die Schäummittelleitungen (411, 412) zuzuführende Flüssigkeiten zu einem homogenen Flüssigkeitsgemisch vermischbar sind.

**9.** Extrusionsvorrichtung nach Anspruch 7 oder 8, **dadurch gekennzeichnet, dass** innerhalb der Schäumlanze (400) weiterhin eine Druckluftzuleitung (420) und/oder ein Kabelkanal (440) und/oder eine Entlüftungsleitung (441) angeordnet sind.

**10.** Extrusionsvorrichtung nach einem der Ansprüche 1 bis 9, **dadurch gekennzeichnet, dass** die Schäumlanze (400) an ihrer Unterseite wenigstens einen Gleitsteg (408; 409) aufweist.

**11.** Extrusionsvorrichtung nach einem der Ansprüche 1 bis 10, **dadurch gekennzeichnet, dass** der Pistolenlauf (101) weiterhin wenigstens folgende axial hintereinander angeordnete Einzelteile umfasst:

- einen Verteilerblock (147);
- wenigstens eine Reduzierplatte (143; 145); und
- eine Düsenplatte (141).

**12.** Extrusionsvorrichtung nach Anspruch 11, **dadurch gekennzeichnet, dass** wenigstens eine Fließkanalplatte (142; 144), in Extrusionsrichtung gesehen, vor der Reduzierplatte (143; 145) angeordnet ist.

**13.** Extrusionsvorrichtung nach einem der Ansprüche 1 bis 12, **dadurch gekennzeichnet, dass** das Profilwerkzeug (180) wenigstens aufweist:

- eine Profilwandungsausnehmung (181), die einen Kernbereich (184) zur Ausbildung wenigstens einer Hohlkammer in dem Kunststoffhohlprofil umschließt, und
- eine in den Kernbereich (184) eingebrachte Schaumkörperhilfswandungsausnehmung (182), die wenigstens entlang eines Teils der Profilwandungsausnehmung (181) beabstandet zu dieser angeordnet ist und mit dieser über wenigstens eine Stegausnehmung (183) verbunden ist.

**14.** Extrusionsvorrichtung nach einem der Ansprüche 1 bis 13, **dadurch gekennzeichnet, dass** in Abzugsrichtung nach dem Profilwerkzeug (100) wenigstens eine Kühl- und Kalibriereinrichtung (200) angeordnet ist.

**15.** Extrusionsvorrichtung nach Anspruch 14, **dadurch gekennzeichnet, dass** die Kühl- und Kalibriereinrichtung (200) eine Rollenkalibriereinrichtung (500) umfasst, in der das Kunststoffhohlprofil allseitig mit einer Vielzahl von Rollen (540.1 - 540.n) mit Druck beaufschlagt wird.

**16.** Verfahren zur Herstellung von Kunststoff hohlprofilen mit wenigstens einer ausgeschäumten Hohlkammer, mit folgenden Schritten:

(1) Extrudieren eines Kunststoffhohlprofils unter Ausformung wenigstens einer Hohlkammer und Abziehen des Kunststoffhohlprofils mit einer Abzugsgeschwindigkeit $V_A$;
(2) Abkühlen des Kunststoffes des sich mit der Abzugsgeschwindigkeit $V_A$ weiterbewegenden Kunststoffhohlprofils;
(3) Einführen einer Schäumlanze in die Hohlkammer, wobei die Schäumlanzenspitze in einem Bereich des Kunststoffhohlprofils positioniert wird, in dem die Temperatur des die Schäumlanzenspitze umgebenden Abschnitts des Kunststoffhohlprofils auf eine Ausschäumtemperatur $T_A$ abgekühlt ist;
(4) Injizieren eines reaktiven Gemisches aus zwei schäumbaren Komponenten in den Hohlkammer mit einer Schäummitteltemperatur $T_s$ und Aufschäumenlassen zu einem Kunststoffisolierschaumkörper unter fortwährender Nachkalibrierung und Nachkühlung von der Außenseite des Kunststoffhohlprofils her,

**dadurch gekennzeichnet, dass** das aus dem Profilwerkzeug (100) austretende Kunststoffhohlprofil auf einer Bahn abgezogen und nachbehandelt wird, die vom Profilwerkzeug (100) ausgehend um einen Winkel $\alpha$ = 1 ... 10° gegenüber einer Horizontalen nach unten geneigt ist.

17. Verfahren nach Anspruch 16, **dadurch gekennzeichnet, dass** ein Reaktionsgemisch ausgewählt wird, das bei einer an der Lanzenspitze gegebenen Schäummitteltemperatur $T_s$ eine Reaktionszeit von 10 ... 20 s bis zur Ausbildung von Kunststoffschaum hat.

18. Verfahren nach Anspruch 16 oder 17, **dadurch gekennzeichnet, dass** das Reaktionsgemisch als erste Reaktionskomponente ein Isocyanat und als zweite Reaktionskomponente einen Polyalkohol und Wasser und/oder eine Carbonsäure enthält und zu einem Polyurethanschaumkörper, einem Polyisocyanuratschaumkörper oder einem Polyharnstoffschaumkörper aufgeschäumt wird.

19. Verfahren nach Anspruch 18, **dadurch gekennzeichnet, dass** Polyol und Isocyanat im Verhältnis von 100 Gewichtsteilen Polyol zu 120 bis 160 Gewichtsteilen Isocyanat gemischt werden.

20. Verfahren nach Anspruch 19, **dadurch gekennzeichnet, dass** je 100 Gewichtsteile an Polyol mit 15 bis 25 Volumenprozent Luft befrachtet werden und das Gemisch aus Polyol und Luft mit 120 bis 160 Gewichtsteilen Isocyanat gemischt wird.

21. Verfahren nach einem der Ansprüche 16 bis 17, **dadurch gekennzeichnet, dass** das Reaktionsgemisch aus einem ungesättigten Polyesterharz, einem Härter und einem Treibmittel zu einem Polyesterharzschaumkörper aufgeschäumt wird.

22. Verfahren nach einem der Ansprüche 16 bis 17, **dadurch gekennzeichnet, dass** das Reaktionsgemisch aus einem Treibmittel und einem expandierbaren thermoplastischen Kunststoff, vorzugsweise Polystyrol, zu einem Thermoplastschaumkörper aufgeschäumt wird.

23. Verfahren nach einem der Ansprüche 17 bis 22, **dadurch gekennzeichnet, dass** die Abzugsgeschwindigkeit $V_A$ zwischen 1 und 8 m/min, insbesondere 2m/min beträgt.

24. Verfahren nach einem der Ansprüche 17 bis 23, **dadurch gekennzeichnet, dass** die Ausschäumtemperatur $T_A$ = 25° ... 50° C, insbesondere $T_A$ = 30°C, beträgt.

25. Verfahren nach einem der Ansprüche 17 bis 24, **dadurch gekennzeichnet, dass** die Schäummitteltemperatur $T_s$ = 15° ... 25°C beträgt.

**Claims**

1. An extrusion device for producing foamed hollow plastic profiles (30; 50; 60; 70; 80) and comprising at least the following parts:

   - an extruder (300) for preparing and supplying a plastic melt;

   - a profiled mould (100) connected to the extruder (300) for conveying melt to an inlet opening (168) and comprising a profiled nozzle (160) with at least one hollow profile nozzle portion (161), and

   - at least one foam lance (400) disposed at least partly inside an annular melt duct (162) terminating at the profiled nozzle (160), the lance being coaxial with a direction for withdrawing the hollow plastic profile (30; 50; 60; 70; 80) leaving the profiled nozzle (160),

   wherein the profiled mould is pistol-shaped, with the following details:

   - a pistol handle (102) with a melt supply duct (166) connectable to the melt outlet opening of the extruder (300) and terminating in a radial melt-distributing duct (164) enclosing the lance guide channel (150), and
   - a piston barrel (101) with an annular melt duct (162) extending from the radial distribution duct (164) to the profiled nozzle (162) and with a lance guide duct (150) extending continuously from a lance inlet opening (152) to the profiled nozzle (160),

   wherein the lance guide axis (154) and the path of the hollow plastic profile in the cooling and calibrating device (200) slope downwards in the withdrawal direction at an angle $\alpha$ = 1 - 10° to the horizontal.

2. An extrusion device according to claim 1, **characterised in that** the lance guide axis (154) and the path of the hollow plastic profile in the cooling and calibrating device (200) slope downwards in the withdrawal direction at an angle $\alpha$ = 1 - 1.5°, particularly 1.35°, to the horizontal.

3. An extrusion device according to claim 1 or 2, **characterised in that** the outer periphery of the foam lance (110) is kept at a radial distance from the outer periphery of the extruder (300).

4. An extrusion device according to claim 1 or 2, **char-**

acterised in that the foam lance (110) is slidable and axially movable along a guide path.

5. An extrusion device according to claim 4, **characterised in that** the guide path is situated on the outer periphery of the extruder (300).

6. An extrusion device according to any of claims 1 to 5, **characterised in that** the tip (401) of the foam lance comprises an ultrasound probe and/or a temperature sensor.

7. An extrusion device according to any of claims 1 to 6, **characterised in that** the foam lance (400) has a one-part profile cross-section and the following pipes extend in the lance (400):

   - a first foaming-agent pipe (410);

   - a second foaming-agent pipe (412);

   - a water flow pipe (414) and

   - at least one water return pipe (430, 431, 432, 433).

8. An extrusion device according to claim 7, **characterised in that** the foaming-agent pipes (411, 412) end at the lance tip (401) and the tip (401) comprises a static mixing tube which contains a number of baffle plates and in which at least two of the liquids supplied through the foaming-agent pipes (411, 412) can be homogeneously mixed.

9. An extrusion device according to claim 7 or 8, **characterised in that** the foam lance (400) also contains a compressed-air feed pipe (420) and/or a cable duct (440) and/or a vent pipe (441).

10. An extrusion device according to any of claims 1 to 9, **characterised in that** the foam lance (400) has at least one sliding web (408; 409) on its underside.

11. An extrusion device according to any of claims 1 to 10, **characterised in that** the pistol barrel (101) comprises at least the following parts disposed axially one behind the other:

    - a distribution block (147);

    - at least one reducing plate (143; 145) and

    - a nozzle plate (141).

12. An extrusion device according to claim 11, **characterised in that** at least one flow duct plate (142; 144), regarded in the extrusion direction, is disposed in front of the reducing plate (143; 145).

13. An extrusion device according to any of claims 1 to 12, **characterised in that** the profiled mould (180) comprises at least

    - a profile wall recess (180) surrounding a core region (184) for forming at least one hollow chamber in the hollow plastic profile and

    - an auxiliary foam-member wall recess (182) formed in the core region (184) and disposed along and at a distance from at least a part of the profile wall recess (181) and connected thereto via at least one web recess (183).

14. An extrusion device according to any of claims 1 to 13, **characterised in that** at least one cooling and calibrating device (200) is disposed in the withdrawal direction behind the profiled mould (100).

15. An extrusion device according to claim 14, **characterised in that** the cooling and calibrating device (200) comprises a roller calibrating device (500) in which the hollow plastic profile is subjected to pressure on all sides by a number of rollers (540.1 - 540.n).

16. A method of producing hollow plastic profiles with at least one expanded hollow chamber, in the following steps:

    (1) extruding a hollow plastic profile so as to form at least one hollow chamber and withdrawal of the hollow plastic profile at a speed $V_A$;

    (2) cooling the hollow plastic profile, which continues to move at the withdrawal speed $V_A$;

    (3) inserting a foam lance into the hollow chamber, the lance tip being positioned in a region of the hollow plastic profile in which the temperature of the portion of the hollow plastic profile surrounding the lance tip has fallen to a foaming temperature $T_A$ and

    (4) injecting a reactive mixture of two expandable components into the hollow chamber at a foaming-agent temperature $T_s$ and expanding the mixture to form an expanded plastic insulating member with continuous after-calibration and after-cooling from the exterior of the hollow plastic profile,

    **characterised in that** the hollow plastic profile leaving the profiled mould (100) is withdrawn and subsequently treated along a path sloping downwards from the profiled mould (100) at an angle of $\alpha = 1 - 10°$ to the horizontal.

**17.** A method according to claim 16, **characterised by** selection of a reaction mixture which, at a foaming-agent temperature $T_s$ at the lance tip, has a reaction time of 10 - 20 s before a plastic foam forms.

**18.** A method according to claim 16 or 17, **characterised in that** the reaction mixture contains a first component, isocyanate, and a second component, a polyalcohol and water and/or a carboxylic acid, and is foamed to form an expanded polyurethane or polyisocyanurate or polyurea member.

**19.** A method according to claim 18, **characterised in that** the polyol and isocyanate are mixed in the proportion of 100 parts by weight of polyol to 120 to 160 parts by weight of isocyanate.

**20.** A method according to claim 19, **characterised in that** 100 parts by weight of polyol are loaded with 15 to 28% by volume of air and the mixture of polyol and air is mixed with 120 to 160 parts by weight of isocyanate.

**21.** A method according to claim 16 or 17, **characterised in that** the reaction mixture of an unsaturated polyester resin, an activator and a foaming agent is foamed to form an expanded polyester resin member.

**22.** A method according to claim 16 or 17, **characterised in that** the reaction mixture of a foaming agent and an expandable thermoplastic, preferably polystyrene, is foamed to form an expanded thermoplastic member.

**23.** A method according to any of claims 17 to 22, **characterised in that** the withdrawal speed $V_A$ is between 1 and 8 m/min, more particularly 2 m/min.

**24.** A method according to any of claims 17 to 23, **characterised in that** the foaming temperature $T_A = 25 - 50°C$, particularly 30°C.

**25.** A method according to any of claims 17 to 24, **characterised in that** the foaming-agent temperature $T_s = 15 - 25°C$.

**Revendications**

**1.** Dispositif d'extrusion pour la fabrication de profilés creux avec expansion de matière plastique (30; 50; 60; 70; 80), comportant au moins les éléments suivants :

- une extrudeuse (300) pour la préparation et le chargement de matière plastique en fusion,

- un outil à profilés (100), qui est relié à l'extrudeuse (300) au niveau d'une ouverture de chargement (168) de matière en fusion, conduisant la matière plastique en fusion, et qui comprend une buse de profilage (160) comportant au moins un tronçon (161) pour profilés creux,

- au moins une lance de moussage (400) qui est ménagée au moins partiellement à l'intérieur d'un canal annulaire (162) de matière en fusion débouchant au niveau de la buse de profilage (160) et coaxialement à une direction d'extraction du profilé creux de matière plastique (30; 50; 60; 70; 80) sortant de la buse de profilage (160),

dans lequel l'outil à profilés (100) est réalisé en forme de pistolet et constitué des éléments suivants :

- une crosse (102) qui comporte un canal (166) d'admission de matière en fusion se raccordant à l'orifice de sortie de matière en fusion de l'extrudeuse (300) et débouchant dans un canal (164) de répartition radiale de la matière en fusion qui entoure le conduit de guidage (150) de la lance,

- et un canon (101) qui comporte un canal annulaire (162) guidant la matière plastique en fusion du canal (164) de répartition radiale de la matière en fusion jusqu'à la buse de profilage (162), et un conduit de guidage de lance (150) s'étendant directement d'un orifice d'entrée (152) de la lance jusqu'à la buse de profilage (160),

et dans lequel l'axe (154) du conduit de guidage de la lance et le trajet du profilé creux en matière plastique, dans le dispositif de refroidissement et de calibrage (200), sont orientés en pente descendante par rapport à l'horizontale, selon un angle $\alpha$ = 1- 10 degrés, dans la direction d'extraction du profilé.

**2.** Dispositif d'extrusion selon la revendication 1, **caractérisé en ce que** l'axe (154) du conduit de guidage de lance et le trajet du profilé creux en matière plastique sont disposés - dans le dispositif de refroidissement et de calibrage (200) - en pente descendante par rapport à l'horizontale selon un angle $\alpha$ = 1 - 1,5 degré, en particulier de 1,35 degré, dans la direction de réception du profilé.

**3.** Dispositif d'extrusion selon la revendication 1 ou 2, **caractérisé en ce que** la lance de moussage (400), au niveau de sa périphérie extérieure, est à distance radialement de la périphérie extérieure de l'extrudeuse (300).

**4.** Dispositif d'extrusion selon la revendication 1 ou 2, **caractérisé en ce que** la lance de moussage (400) est montée coulissante et mobile axialement sur un chemin de guidage.

**5.** Dispositif d'extrusion selon la revendication 4, **caractérisé en ce que** le chemin de guidage est agencé sur la périphérie extérieure de l'extrudeuse (300).

**6.** Dispositif d'extrusion selon une quelconque des revendications 1 à 5, **caractérisé en ce que** la pointe (401) de la lance de moussage comporte un détecteur à ultrasons et/ou un capteur de température.

**7.** Dispositif d'extrusion selon une quelconque des revendications 1 à 6, **caractérisé en ce que** la lance de moussage (400) est d'une seule pièce en section transversale et **en ce qu'**à l'intérieur de la lance de moussage (400) sont agencées les conduites suivantes :

- une première conduite d'agent moussant (410),

- une deuxième conduite d'agent moussant (412),

- une conduite d'eau montante (414),

- et au moins une conduite d'eau descendante (430, 431, 432, 433).

**8.** Dispositif d'extrusion selon la revendication 7, **caractérisé en ce que** les conduites d'agent moussant (411, 412) débouchent au niveau de la pointe (401) de la lance de moussage et **en ce que** cette pointe (401) est équipée d'un tube mélangeur statique qui comporte, à l'intérieur, un grand nombre de plaques de renvoi, et dans lequel au moins deux liquides introduits à travers les conduites d'agent moussant (411, 412) peuvent se mélanger pour constituer un mélange homogène de liquides.

**9.** Dispositif d'extrusion selon la revendication 7 ou 8, **caractérisé en ce qu'**à l'intérieur de la lance de moussage (400) il est agencé, en outre, une conduite d'alimentation d'air comprimé (420) et/ou une conduite de passage de câbles (440) et/ou une conduite d'évacuation d'air (441).

**10.** Dispositif d'extrusion selon une quelconque des revendications 1 à 9, **caractérisé en ce que** la lance de moussage (400) comporte, sur son côté inférieur, au moins une barrette de glissement (408, 409).

**11.** Dispositif d'extrusion selon une quelconque des revendications 1 à 10, **caractérisé en ce que** le canon de pistolet (101) comporte, en outre, au moins les éléments suivants, agencés les uns à la suite des autres, dans le sens axial :

- un bloc de distribution (147),

- au moins une plaque de réduction (143, 145),

- et une plaque-buse (141).

**12.** Dispositif d'extrusion selon la revendication 11, **caractérisé en ce qu'**au moins une plaque de canal d'écoulement (142, 144) est agencée, vue dans la direction d'extrusion, devant la plaque de réduction (143, 145).

**13.** Dispositif d'extrusion selon l'une quelconque des revendications 1 à 12, **caractérisé en ce que** l'outil à profilés (180) comporte au moins :

- un évidement de formation de paroi de profilé (181), qui entoure une zone centrale (184) pour la réalisation d'au moins une chambre creuse dans le profilé creux en matière plastique,

- et un évidement (182) de paroi auxiliaire du bloc de mousse qui est adjoint à la zone centrale (184) et qui est ménagé le long d'au moins une partie de l'évidement de paroi de profilé (181) à l'écart de ce dernier et relié à lui par au moins un espace vide (183) destiné à former une entretoise.

**14.** Dispositif d'extrusion selon l'une quelconque des revendications 1 à 13, **caractérisé en ce qu'**il est prévu au moins un dispositif de refroidissement et de calibrage (200) agencé à la suite de l'outil à profilés (100), dans la direction d'extraction du profilé.

**15.** Dispositif d'extrusion selon la revendication 14, **caractérisé en ce que** le dispositif de refroidissement et de calibrage (200) comprend un dispositif de calibrage à rouleaux (500), dans lequel le profilé creux en matière plastique est mis sous pression de tous les côtés, au moyen d'un grand nombre de rouleaux (540.1 - 540.n).

**16.** Procédé de fabrication de profilés creux en matière plastique pourvus d'au moins une chambre creuse de mousse expansée, qui comprend les étapes suivantes:

(1) Extrusion d'un profilé creux en matière plastique avec formage d'au moins une chambre creuse et extraction de ce profilé creux en matière plastique à une vitesse de sortie $V_A$;

(2) Refroidissement de la matière plastique du profilé creux cependant qu'il poursuit son déplacement à la vitesse de réception $V_A$;

(3) Introduction d'une lance de moussage dans la chambre creuse, la pointe de la lance étant positionnée dans une zone du profilé creux en matière plastique où la section du profilé qui entoure la pointe de la lance est refroidie jusqu'à une température de moussage $T_A$;

(4) Injection, dans la chambre creuse, d'un mélange réactionnel de deux composants expansibles, à une température d'agent moussant $T_s$, et expansion de la mousse jusqu'à ce que celle-ci constitue un bloc de mousse de matière plastique isolante, avec recalibrage continu et refroidissement postérieur à partir de l'extérieur du profilé creux en matière plastique,

**caractérisé en ce que** le profilé creux en matière plastique sortant de l'outil à profilés (100) est réceptionné et re-traité sur un trajet qui, à partir de l'outil à profilés (100), est en pente descendante, par rapport à l'horizontale, selon un angle $\alpha$ = 1 - 10 degrés.

17. Procédé selon la revendication 16, **caractérisé en ce que** le mélange réactionnel choisi est un mélange qui, à une température d'agent moussant $T_s$ donnée à la pointe de la lance, a une durée de réaction de 10 - 20 s jusqu'à la formation d'une mousse de matière plastique.

18. Procédé selon la revendication 16 ou 17, **caractérisé en ce que** le mélange réactionnel comporte, comme premier composant réactionnel, un isocyanate et, comme deuxième composant réactionnel, un polyol et de l'eau et/ou un acide carboxylique, et **en ce qu'**on fait mousser ce mélange réactionnel pour obtenir un bloc de mousse de polyuréthane, de mousse de polyisocyanurate ou de mousse de polycarbamide.

19. Procédé selon la revendication 18, **caractérisé en ce que** le polyol et l'isocyanate sont mélangés dans une proportion de 100 parties pondérales de polyol pour 120 à 160 parties pondérales d'isocyanate.

20. Procédé selon la revendication 19, **caractérisé en ce que** chaque part de 100 parties pondérales de polyol est chargée de 15 à 25 pourcents volumétriques d'air et **en ce que** ce mélange de polyol et d'air est mélangé avec 120 à 160 parts pondérales d'isocyanate.

21. Procédé selon l'une quelconque des revendications 16 à 17, **caractérisé en ce que** l'on fait mousser le mélange réactionnel composé d'une résine polyester non saturée, d'un durcisseur et d'un agent moussant pour obtenir un bloc de mousse de résine polyester.

22. Procédé selon l'une quelconque des revendications 16 à 17, **caractérisé en ce qu'**on fait mousser le mélange réactionnel composé d'un agent moussant et d'une matière thermoplastique expansible, de préférence du polystyrène, pour obtenir un bloc de mousse de matière thermoplastique.

23. Procédé selon l'une quelconque des revendications 17 à 22, **caractérisé en ce que** la vitesse de réception $V_A$ est de 1 à 8 m/mn, en particulier de 2 m/mn.

24. Procédé selon une quelconque des revendications 17 à 23, **caractérisé en ce que** la température de moussage in situ est de $T_A$ = 25° - 50°C, en particulier de $T_A$ = 30°C.

25. Procédé selon une quelconque des revendications 17 à 24, **caractérisé en ce que** la température d'agent moussant est de $T_s$ = 15° - 25° C.

Fig.1

EP 1 237 697 B1

150 101 152 154 100

400

α

102 D

300

Fig.2

EP 1 237 697 B1

Fig. 3

Fig. 4

Fig.5a

Fig.5b

21

EP 1 237 697 B1

400

430   410  420   406  412      431

407                            402

440                            404

433    408    414    441  409  432

Fig. 6

22

EP 1 237 697 B1

221.1

222   58   51   58

52

222

95

55

54

~56~

20   53   50   20   224

57

Fig. 7

23

Fig.8

EP 1 237 697 B1

80

81

82

83

98

Fig. 9

180

181

182

183

184

~150~

Fig. 10